(19) Europäisches Patentamt
European Patent Office
Office européen des brevets

(11) EP 0 563 281 B1

(12) EUROPEAN PATENT SPECIFICATION

(45) Date of publication and mention of the grant of the patent:
**05.08.1998 Bulletin 1998/32**

(21) Application number: **92903442.9**

(22) Date of filing: **18.12.1991**

(51) Int Cl.[6]: **H01B 1/12**, C08G 73/02

(86) International application number:
**PCT/US91/09571**

(87) International publication number:
**WO 92/11645 (09.07.1992 Gazette 1992/17)**

# (54) METHOD FOR PROCESSING ELECTRICALLY CONDUCTIVE POLYANILINES IN LEWIS-BASE SOLVENTS

VERFAHREN ZUR HERSTELLUNG ELEKTRISCH LEITFÄHIGER POLYANILINE IN LEWIS-BASE-LÖSUNGSMITTEL

PROCEDE DE TRAITEMENT DE POLYANILINE ELECTRO-CONDUCTRICE DANS DES SOLVANTS DE BASE LEWIS

(84) Designated Contracting States:
**DE FR GB IT**

(30) Priority: **20.12.1990 US 630905**

(43) Date of publication of application:
**06.10.1993 Bulletin 1993/40**

(73) Proprietor: **MONSANTO COMPANY**
**St. Louis, Missouri 63167 (US)**

(72) Inventors:
- **HAN, Chien-Chung**
  **Madison, NJ 07940 (US)**
- **ELSENBAUMER, Ronald, L.**
  **Morristownship, NJ 07960 (US)**
- **SHACKLETTE, Lawrence, W.**
  **Maplewood, NJ 07040 (US)**

(74) Representative: **Brock, Peter William et al**
**Urquhart-Dykes & Lord**
**1 Richfield Place**
**Richfield Avenue**
**Reading RG1 8EQ Berkshire (GB)**

(56) References cited:

| | |
|---|---|
| **WO-A-90/10297** | **US-A- 4 940 517** |
| **US-A- 4 983 322** | **US-A- 5 006 278** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

This invention relates to solutions of electrically conductive substituted or unsubstituted polyanilines and to methods of forming such solutions. Another aspect of this invention relates to a method of using such solutions to form conductive articles, such as printings, coatings, films and parts.

2. Prior Art

There has recently been an increased interest in the electrochemistry and electrical phenomena of polymeric systems. Recently, work has intensified with polymers having extended conjugation in at least one backbone chain.

One conjugated polymer system currently under study is polyaniline. Kobayashi, Tetsuhiko, et al., J. Electroanal. Chem.. "Electrochemical Reactions Concerned With Electrochromism of Polyaniline Film-Coated Electrodes", 177 (1984) 281-191, describes various experiments in which spectro electro-chemical measurements of a polyaniline film coated electrode were made. French Patent No. 1,519,729; French Patent of Addition 94,536; U.K. Patent 1,216,549; "Direct Current Conductivity of Polyaniline Sulfate", M. Donomedoff, F. Kautier - Cristojini, R. De Surville, M. Jozefowicz, L-T. Yu, and R. Buvet, J. Chim. Phys. Physicohim. Brol, 68, 1055 (1971); "Continuous Current Conductivity of Macromolecular Materials", L-T. Yu, M. Jozefowicz, and R. Buvet, Chim. Macromol., 1, 469 (1970); "Polyaniline Based Filmogenic Organic Conductive Polymers", D. LaBarre and M. Jozefowicz, C.R. Read. Sci., Ser. C. 269,964 (1969); "Recently Discovered Properties of Semiconducting Polymers", M. Jozefowicz, L-T. Yu, J. Perichon, and R. Buvet, J. Polym. Sci. Part C, 22, 1187 (1967); "Electrochemical Properties of Polyaniline Sulfates:, F. Cristojini, R. De Surville, and M. Jozefowicz, Cr. Read. Sci., Ser. C. 268, 1346 (1979); "Electrochemical Cells Using Protolytic Organic Semiconductors", R. De Surville, M. Jozefowicz, L-T. Yu, J. Perichon, R. Buvet, Electrochem. Ditn.. 13, 1451 (1986); "Oligomers and Polymers Produced by Oxidation of Aromatic Amines:, R. De Surville, M. Jozefowicz, and R. Buvet, Ann. Chem. (Paris), 2 5 (1967); "Experimental Study of the Direct Current Conductivity of Macromolecular Compounds:, L-T. Yu, M. Borredon, N. Jozefowicz, G. Belorgey, and R. Buvet, J. Polym. Sci. Polym. Symp., 16, 2931 (1967); "Conductivity and Chemical Properties of Oligomeric Polyaniline", M. Jozefowicz, L-T. Yu, G. Belorgey and R. Buvet, J. Polym. Sci.. Polym. Symp., 16, 2934 (1967); "Products of the Catalytic Oxidation of Aromatic Amines", R. De Surville, M. Jozefowicz, and R. Buvet, Ann. Chem. (Paris), 2, 149 (1967); "Conductivity and Chemical Composition of Macromolecular Semiconductors", Rev. Gen. Electr., 75, 1014 (1966); "Relation Between the Chemical and Electrochemical Properties of Macromolecular Semiconductors", M. Jozefowicz and L-T. Yu, Rec. Gen. Electr., 75, 1008 (1966); "Preparation, Chemical Properties, and Electrical Conductivity of Poly-N-Alkyl Anilines in the Solid State", O. Muller and M. Jozefowicz, Bull. Soc. Chem. Fr. 4087 (1972).

U.S. Patent Nos. 3,963,498 and 4,025,463 describe oligomeric polyanilines and substituted polyanilines having not more than 8 aniline repeat units which are described as being soluble in certain organic solvents and which are described as being useful in the formation of semi-conductor compositions having bulk electrical conductivities up to about $7 \times 10^{-3}$ S/cm and, surface resistivities of $4 \times 10^7$ ohm/square. European Patent No. 0017717 is an apparent improvement in the compositions of U.S. Patent Nos. 3,963,498 and 4,025,463 and states that the polyaniline can be formed into a latex composite through use of acetone solutions of the oligomers of polyaniline and suitable binder polymers.

U.S. Patent No. 4,855,361 describes a conductive polymer blend which comprises mixing a polyimide with a base-type polymer containing carbon nitrogen linkages, such as polyaniline, having a polyimide-like group covalently linked to the nitrogen atoms of the base-type polymer. The conductive polymer blend is formed by first reacting a base-type non-conductive polymer containing carbon-nitrogen linkages, such as polyaniline, with a carbonyl anhydride, such as 3,4,3',4' benzophenone tetracarboxylic dianhydride to form a conductive polymer containing polyimide-like groups covalently linked to the nitrogen atoms of the base-type polymer mixing such conductive polymer with non-conductive polyimide in a suitable solvent, removing the solvent, and forming a conductive continuous phase blend of the polyimide and the conductive polymer.

U.S. Patent No. 4,798,685 describes the production of base-type conductive polymers, particularly from the family of conductive polyaniline, by reacting a base-group non-conductive polymer containing carbon-nitrogen linkages, e.g. polyaniline,with an $R^+$ donor compound, where R is an organic group, e.g. methyl iodide, and forming an electrically conductive polymer in which the R groups are covalently linked to the nitrogen atoms of the polymer.

U.S. Patent No. 4,806,271 describes the production of base-type conductive polymers, particularly from the family of conductive polyaniline, by reacting a base-type non-conductive polymer containing carbon-nitrogen linkages e.g., polyaniline, with a cation donor compound, such as $R_2SO_4$, $R'SO_2Cl$ or $R''_3SiCl$, where R, R' and R" are alkyl or aryl,

such as dimethyl sulfate or tosyl chloride, and forming an electrically conductive polymer in which the R groups of $R_2SO_4$ the $R'SO_2$ groups of $R'SO_2Cl$, or the $R''_3Si$ groups of $R''_3SiCl$ are covalently linked to the nitrogen atoms of the polymer.

U.S. Patent No. 4,822,638 describes a process for fabricating as electronic device on a non-conductive polymer substrate, particularly from the family of polyaniline, which comprises applying a covalent doping agent,such as an $R^+$ donor compound, where R is an organic group, e.g., methyl iodide, to a preselected portion of a base-type non-conductive polymer substrate containing carbon-nitrogen linkages, and converting such preselected portion of the polymer substrate to an electrically conductive polymer portion, by covalent linkage of the R groups of such donor compound, to the nitrogen atoms of the non-conductive polymer substrate. Electronic devices, such as resistors, capacitors, inductors, printed circuits and the like, can be provided by the invention process, in the form of light-weight polymers containing no metal,and which are stable and wherein the conductive portions are non diffusing.

U.S. Patent No. 4,851,487 describes the production of base-type conductive polymers, particularly from the family of conductive polyaniline, by reacting a base-type non-conductive polymer containing carbon-nitrogen linkages, e.g., polyaniline, with an anhydride such as $R-SO_2-O-SO_2-R'$, R-CO-O-CO-R', $R-CO-O-SO_2R$ or mixtures thereof, where R and R' can be the same or different and are alkyl or aryl, e.g., tosylic anhydride or benzophenone tetracarboxylic dianhydride, and forming an electrically conductive polymer in which the $SO_2R$ and COR groups are covalently linked to the nitrogen atoms of the conductive polymer and the anion of the conductive polymers is the $RSO_3^-$ or $R'CO_2^-$ group.

U.S. Patent No. 4,798,685 describes the production of base-type conductive polymers, particularly from the family of conductive polyaniline, by reacting a base-type non-conductive polymer containing carbon-nitrogen linkages, e.g., polyaniline, with an $R^+$ donor compound, where R is an organic group, e.g., methyl iodide, and forming an electrically conductive polymer in which the R groups are covalently linked to the nitrogen atoms of the polymer.

PCT WO89/01694 describes various forms of electrically conductive polyanilines doped with certain sulfonated dopants. It is disclosed that these materials are thermally stable and can be melt blended with polymers to form blends.

Schoch, in *Polym. Prep. (Am. Chem. Soc., Div. Polym. Chem.)* 1989, 30(1), 317-318 studied the behaviour of films obtained by spin-coating a solution of polyaniline tosylate in piperidine onto a glass or NaCl substrate, followed by drying. The films were doped by exposure to iodine vapour followed by treatment with hydrochloric acid. Fresh solutions were found to provide emeraldine salts, whereas solutions that had been allowed to stand before the films were formed, provided pernigraniline salts.

One aspect of this invention relates to non-electrically conductive solutions and to non-electrically conductive plasticized compositions comprising one or more substituted or unsubstituted polyanilines; one or more Lewis base/dopant complexes, said dopants capable of doping one or more of said polyanilines to form electrically conductive polyaniline on release of said dopants from said complexes and said Lewis bases selected from the group consisting of Lewis bases other than piperidine which are in the liquid state under use conditions, which have a $pK_a$ greater than that of said polyanilines, which are capable of complexing with said dopants in the presence of said polyanilines and which are solvents for said complexes and for said undoped polyanilines; and Lewis base in an amount sufficient to dissolve said complexes and said polyanilines, to plasticize said polyanilines or a combination thereof. As used herein a "solution" is a real solution or an ultra-fine dispersion having an average particle size of less than about 100 nanometers; a "plasticized composition" is a polymer or a polymer blend which is softened by incorporation of a liquid or low melting temperature solid generally to a level of more than 1% by weight and less than 20% by weight. As used herein "polyaniline" is a polymer which is synthesized for example by the head-to-tail linkage of substituted or unsubstituted aniline, and which depending on oxidation state consists of phenyl rings and amide linkage (-NH- or -HR- where R is a substituent other than hydrogen) alternating with varying amounts of quinoid rings and imine (-N=) linkages. As used herein "undoped polyaniline" is characterized by an uncharged backbone, and "polyaniline base" is a particular form of undoped polyaniline which contains at least one quinoid diimine linkage in the backbone.

Another aspect of this invention relates to a method of forming a conductive article or forming a conductive polymer coated substrate from a non-electrically conductive solution or plasticized composition of this invention which comprises the steps of:

(a) forming a non-electrically conductive solution or a non-electrically conductive plasticized composition comprising one or more substituted or unsubstituted polyanilines, one or more Lewis base/dopant complexes, said dopants capable of doping one or more of said polyanilines to form electrically conductive polyanilines on release of said dopants from said complexes and said Lewis bases selected from the group consisting of Lewis bases other than piperidine which are in the liquid state under use conditions, which have a $pK_a$ greater than that of said polyanilines, which are capable of complexing with said dopants in the presence of said polyanilines and which are solvents for said complexes and for said undoped polyanilines; and Lewis base in an amount sufficient to dissolve said complexes and said polyaniline to plasticize said polyanilines or a combination thereof;
(b) placing all or a portion of said solution or composition onto a substrate or in the shape of said article; and
(c) removing all or a portion of said liquid Lewis bases from said solution or plasticized composition to form solidified

doped electrically conductive polyanilines having the configuration of said article or a substrate coated with said electrically conductive polyanilines.

Through use of this invention polyaniline can be conveniently processed into useful conductive articles of all shapes.

BRIEF DESCRIPTION OF THE INVENTION

The invention will be more fully understood and further advantages will become apparent when reference is made to the following detailed description of the invention and accompanying drawings in which:

Figure 1 is a graph showing the Hansen Solubility Parameters of solvents for polyaniline base.

Figure 2 is a graph showing the Hansen Solubility Parameters relative to polyaniline base for solvents and non-solvents.

DETAILED DESCRIPTION OF THE INVENTION

The non-electrically conductive solutions or plasticized composition of this invention comprises three essential ingredients. One essential ingredient is one or more substituted or unsubstituted polyanilines which are capable of being made electrically conductive (conductivity of at least about $10^{-10}$ $Scm^{-1}$ by the co-linear four-probe method) with a suitable dopant. Any form of substituted and unsubstituted polyaniline can be conveniently used in the practice of this invention. Illustrative of useful forms are those described in Green, A.G. and Woodhead, A.E., Aniline-black and Allied Compounds, Part I", J. Chem. Soc.. 101 pp. 1117 (1912) and Kobayashi, et al., "Electrochemical Reactions... of Polyaniline Film-Coated Electrodes", J. Electroanal. Chem., 177, pp. 281-91 (1984) and in Shacklette, L.W. et al. "Structure and Properties of polyaniline as modeled by Single-Crystal Oligomers" J. Chem Phys., 88, 3955 (1988), which are hereby incorporated by reference. For example, unsubstituted or unsubstituted polyaniline, useful forms, which are characterized by different ratios of phenylene amine and quinone imine backbone segments include leucoemeraldine, protoemeraldine, emeraldine, nigraniline and pernigraniline.

In the preferred embodiments of the invention, polyanilines for use in the invention are homopolymers and copolymers of the type derived from the polymerization of unsubstituted and substituted anilines of the Formula I:

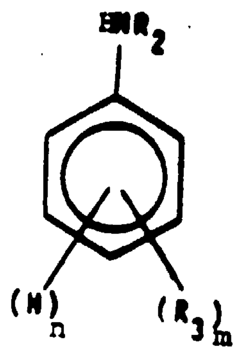

wherein:

n is an integer from 0 to 5;

m is an integer from 0 to 5 with the proviso that the sum of n and m is equal to 5;

$R_2$ is the same or different at each occurrence and is $R_3$ substituents or hydrogen; and

$R_3$ is the same or different at each occurrence and is selected from the group consisting of phosphonic acid, cyano, nitro, boric acid, phosphoric acid, halo, sulfinate, carboxylic acid, phosphonic acid, halogen, hydroxy, cyano, sulfinic acid, phosphinic acid, carboxylate, borate, phosphate, amido, sulfonate, phosphinate, phosphonate, hydroxyamine, sulfonic acid, nitro, deuterium, amino, or substituted or unsubstituted alkenyl, alkoxy, cycloalkyl, cycloalkenyl, alkanoyl, alkythio, alkyl, aryloxy, alkylthioalkyl, arylalkylamino, alkylaryl, arylalkyl, alkylamino, arylamino, dialkylamino, diarylamino, aryl, alkylsulfinyl, aryloxyalkyl, alkylsulfinylalkyl, alkoxyalkyl, alkylsulfonyl, arylthio, alkylsulfonylalkyl, arylsulfinyl, alkoxycarbonyl, arylsulfonyl, alkylsilane or alkyl wherein permissible substituents are one or more phosphonic acid, sulfonic acid, phosphoric acid, boric acid, sulfate, sulfinic acid, carboxylate, borate, sulfonate, phosphinate, sulfinate, quaternary ammonium, phosphonate, hydroxylamine, amido, phosphate,

phosphinic acid, carboxylic acid, halo, hydroxyamine, nitro, cyano or epoxy substituents; or any two $R_3$ groups together or one or more $R_3$ group together with an $R_2$ group may form a substituted or unsubstituted alkylene, alkenylene, or alkynylene chain completing a 3, 4, 5, 6, 7, 8, 9 or 10 membered aromatic, heteroalicyclic, heteroaromatic or alicyclic ring, which ring may optionally include one or more divalent nitrogen, sulfur, sulfinyl, ester, carbonyl, sulfonyl, or oxygen atoms wherein permissible substituents are one or more phosphonic acid, sulfonic acid, phosphoric acid, boric acid, sulfate, carboxylate, borate, sulfonate, sulfinic acid, phosphinate, quaternary ammonium, phosphonate, sulfinate, amido, hydroxylamine, phosphate, phosphinic acid, carboxylic acid, hydroxyamino, halo, nitro, cyano or epoxy moieties; or $R_3$ is a divalent organic moiety bonded to the same or a different substituted or unsubstituted aniline moiety or $R_3$ is an aliphatic moiety having repeat units of the formula:

$$(OCH_2CH_2)_qO\text{-}CH_3,\ (OCH_2CH(CH_3))_qO\text{-}CH_3,\ (CH_2)_q\ CF_3,\ (CF_2)_q\text{-}CF_3 \text{ or } (CH_2)_q\ CH_3$$

wherein q is a positive whole number.

Illustrative of the polyanilines useful in the practice of this invention are those of the Formulas II to V:

II

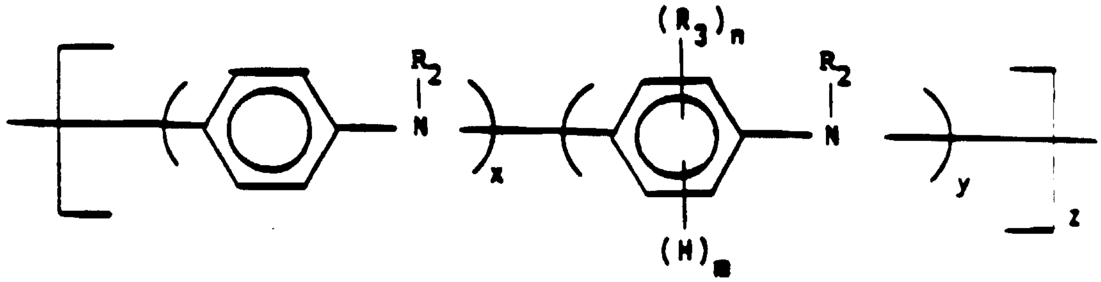

III

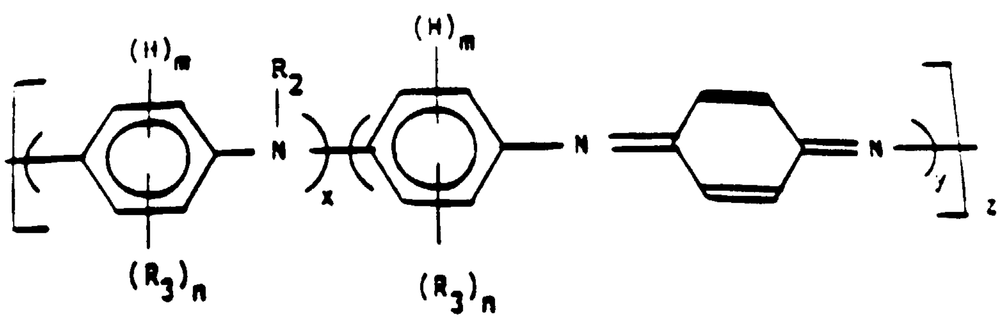

IV

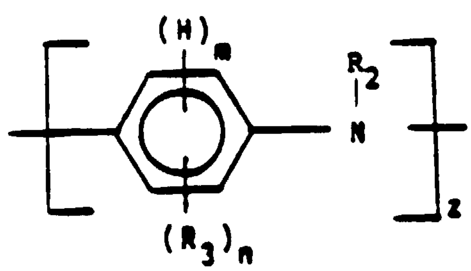

V

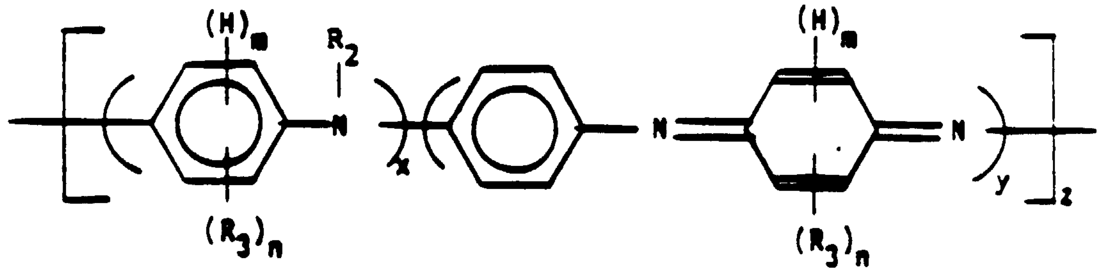

wherein:

n is an integer from 0 to 4;
m is an integer from 0 to 4; with the proviso that the sum of n and m is 4;
$R_2$ and $R_3$ are as described above;
x and y are the same or different at each occurrence and are integers equal to or greater than 0, with the proviso that the sum of x and y is greater than 0; preferably were x is an integer equal to or greater than about 1, and/or the ratio of x to y is greater than or equal to about 0.5; and
z is an integer equal to or greater than 1.

The following listing of substituted and unsubstituted anilines are illustrative of those which can be used to prepare polymers and copolymers useful in the practice of this invention. 2-Cyclohexylaniline 2-Acetylaniline Aniline 2,5-Dimethylaniline o-Toluidine 2,3-Dimethylaniline 4-Propanoylaniline N-Pentylaniline 2-(Methylamino)aniline 4-Benzylaniline 2-(Dimethylamino)aniline 4-Aminoaniline 2-Methyl-5-methoxy- 2-Methylthiomethylaniline carbonylaniline 4-(2,4-Dimethylphenyl) N-Ethylaniline aniline 4-Carboxyaniline 2-Ethylthioaniline N-Methyl aniline N-Methyl m-Toluidine 2,4-Dimethylaniline N-Butyl o-Toluidine N-Propyl aniline N-Propyl m-Toluidine N-Hexyl aniline N-Methyl-o-Cyanoaniline m-Toluidine 2,5-Dibutylaniline o-Ethylaniline 2,5-Dimethoxyaniline m-Ethylaniline Tetrahydronaphthylamine o-Ethoxyaniline o-Cyanoaniline m-Butylaniline 2-Methylthioaniline m-Hexylaniline 2,5-Dichloroaniline m-Octylaniline 3-(n-Butanesulfonic acid) 4-Bromoaniline aniline 2-Bromoaniline 3-Propoxymethylaniline 3-Bromoaniline 2,4-Dimethoxyaniline 3-Acetamidoaniline 4-Mercaptoaniline 4-Acetamidoaniline 4-Ethylthioaniline 5-Chloro-2-methoxy-aniline 3-Phenoxyaniline 5-Chloro-2-ethoxy-aniline 4-Phenoxyaniline N-Hexyl-m-Toluidine N-Octyl m-Toluidine 4-Phenylthioaniline 4-Trimethylsilylaniline 3-Amino-9-methylcarbazole 3-Amino carbazole 4-Amino carbazole 2-Amino carbazole 3-Butoxyaniline N-(p-Aminophenyl)aniline 2,5-Dibutoxyaniline 2-Butoxyaniline

Exemplary of useful $R_2$ groups are hydrogen, methyl, ethyl, isopropyl, butyl, isobutyl, hexyl, octyl and the like.

Illustrative of useful $R_3$ groups are hydrogen, hydroxyl, alkyl such as methyl, ethyl, octyl, benzyl nonyl, tert-butyl, neopentyl, isopropyl, sec-butyl, dodecyl and the like, alkenyl such as 1-propenyl, 1-butenyl, 1-pentenyl, 1-hexenyl, 1-heptenyl, l-octenyl and the like; alkoxy such as propoxy, butoxy, methoxy, isopropoxy, pentoxy, nonoxy, ethyoxy, octoxy, and the like; cycloalkenyl such as cyclohexenyl, cyclopentenyl and the like; alkanoyl such as butanoyl, pentanoyl, octanoyl, ethanoyl, propanoyl and the like; alkylsulfinyl, alkylsulfonyl, alkylthio, arylsulfonyl, arylsulfonyl, and the like, such as butylthio, neopentylthio, methylsulfinyl, benzylsulfinyl, phenylsulfinyl, propylthio, octylthio, nonylsulfonyl, octylsulfonyl, methylthio, isopropylthio, phenylsulfonyl, methylsulfonyl, nonylthio, phenylthio, ethylthio, benzylthio, phenethylthio, sec-butylthio, naphthylthio and the like; alkoxycarbonyl such as methoxycarbonyl, ethoxycarbonyl, butoxycarbonyl and the like; cycloalkyl such as cyclohexyl, cyclopentyl, cyclo- octyl, cycloheptyl and the like; alkoxyalkyl such as methoxymethyl, ethoxymethyl, butoxymethyl, propoxyethyl, pentoxybutyl and the like; aryloxyalkyl and aryloxyaryl such as phenoxyphenyl, phenoxymethyl and the like; amino, arylamino, alkylamino, diarylamino, dialkylamino and alkylarylamino such as amino, methylamino, dimethylamino, phenylamino, methylethylamino, diphenylamino, methylphenylamino and the like; various substituted alkyl and aryl groups such as 1-hydroxybutyl, 1-aminobutyl, 1-hydroxylpropyl, 1-hydroxypentyl, 1-hydroxyoctyl, 1-hydroxyethyl, 2-nitro-ethyl, trifluoromethyl, 3,4-epoxybutyl, cyanomethyl, 3-chloropropyl, 4-nitrophenyl, 3-cyanophenyl, and the like; acid groups and salts thereof such as sulfonic acid, carboxylate, carboxylic acid, carboxylate, phosphoric acid and the like; and organic radicals such as alkoxy, alkoxyalkyl, arylamino, alkyl or aryl groups substituted with one or more acid groups and/or salts thereof such as phosphonic acid, phosphinic acid, sulfinate, sulfonic acid, sulfinic acid, borate, phosphoric acid, carboxylate, boric acid, or carboxylic acid groups such as ethylsulfonic acid, propylsulfonic acid, butylsulfonic acid, phenylsulfonic acid, and the like.

Also illustrative of useful $R_3$ groups are divalent moieties derived from any two R3 groups or a R3 group with an $R_2$ group such as moieties of the formula:

$$(CR_5=CR_5-CR_5=CR_5)_b\ (C(R_5)_2)_a$$

wherein a is an integer from about 3 to about 7, and b is an integer from 1 to 2 and $R_5$ is the same or different at each occurrence and is hydrogen or alkyl, as for example $-(CH_2)_4$, $(CH_2)_3$-,-(CH=CH-CH=CH)-, $-CH_2-CH(CH_3)-CH_2-$ and $-(CH_2)_5$, such moieties which optionally include heteroatoms of oxygen, nitrogen, ester, sulfonyl, carbonyl, sulfinyl, and/or sulfur such as $-CH_2SCH_2-$, $-CH_2NHCH_2-$, $-SCH_2NHCH_2-$, $O-CH_{22}O-$, $-O-CH_2-S-CH_2-$, $-CH_2S(O_2)CH_2-$, $-CH_2S(O)CH_2-$, $-OC(O)CH_2CH_2-$, $-CH_2C(O)CH_2$ and $-CH_2-O-CH_2-$ to form heterocyclic amino compounds such as tetrahydronaphthylamine, dihydrobenzopyrroleamine, benzofuranamine, dihydrobenzopyranamine, dihydrobenzofuranamine, dihydrobenzoparaxazineamine, dihydrobenzoparadiazineamine, dihydrobenzotriazoleamine, dihydrobenzothiazineamine,benzothiopyranamine, dihydrobenzoxazoleamine and the like. Exemplary of useful $R_3$ groups are divalent alkenylene chains containing 1 to about 3 unsaturated bonds such as divalent 1,3-butadiene and like moieties which may also include one or more divalent oxygen, nitrogen, sulfinyl, sulfonyl, carbonyl, ester, and/or sulfur groups which form such compounds as benzodiazineamine, benzodiazoleamine, benzotriazepine amine, benzimidazolylamine, benzisoxazoleamine, benzoxazolylamine, benzotriazineamine, benzoxazineamine, naphthaleneamine, benzopyranamine, benzothiazineamine, anthraceneamine, aminobenzothio-pyran,aminobenzodiazine, benzthiopyroneamine, aminocoumarin, benzothiopheneamine, benzothiadiazoleamine, and the like.

Preferred for use in the practice of this invention are polyanilines of the above Formulas II to V in which:

n is an integer from 0 to about 2;
m is an integer from 2 to 4, with the proviso that the sum of n and m is equal to 5;
$R_2$ is the same or different at each occurrence and is $R_3$ or hydrogen; or
$R_3$ is alkyl or alkoxy having from 1 to about 30 carbon atoms, sulfonic acid, hydroxylamine, carboxylic acid, phosphoric acid, amino, alkylamino, dialkylamino, arylamino, diarylamino, boric acid, borate, phosphate, phosphonic acid, phosphonate, phosphinic acid, phosphinate, sulfinic acid, sulfinate, sulfonate, carboxylate, alkylarylamino, cyano, halo, or alkyl, aryl or alkoxy substituted with phosphonic acid, phosphate, phosphoric acid, halo, alkoxy, alkyl, borate, sulfonate, carboxylate, phosphonate, boric acid, phosphinic acid, amino, alkylamino, sulfinic acid, sulfinate, dialkylamino, arylamino, diarylamino, alkylarylamino, phosphinate, carboxylic acid or sulfonic acid substituents;
x is an integer equal to or greater than 1;
y is equal to or greater than 0, with the proviso that the ratio of x to y is greater than about 1; and
z is an integer equal to or greater than about 5;

Particularly preferred for use in the practice of this invention are polyanilines of the above Formulas II to V in which:

n is an integer from 0 to 1;
m is an integer from 3 to 4, with the proviso that the sum of n and m is equal to 4;
$R_2$ is the same or different at each occurrence and are hydrogen or methyl;
$R_3$ is alkyl or alkoxy having from 1 to about 20 carbon atoms, alkylamino, amino, dialkylamino, boric acid, borate, arylamino, diarylamino, alkylarylamino, sulfonic acid, carboxylic acid, halo, phosphoric acid, sulfonate, carboxylate, or phosphate, or alkyl or aryl substituted with carboxylic acid, phosphonic acid, phosphate, boric acid, phosphoric acid, borate, sulfonate, halo, carboxylate, alkylamino, amino, dialkylamino, arylamino, diarylamino, alkylarylamino, phosphonate, or sulfonic acid substituents;
x is an integer equal to or greater than 2;
y is equal to or greater than 0, with the proviso that the ratio of x to y is greater than about 2; and
z is an integer equal to or greater than about 5.

Amongst the particularly preferred embodiments, most preferred for use in the practice of this invention are polyanilines of the above Formulas in which:

n is an integer from 0 to 1;
m is an integer from 3 to 4, with the proviso that the sum of n and m is equal to 4;
$R_2$ is hydrogen;
$R_3$ is alkyl or alkoxy from 1 to about 15 carbon atoms carboxylic acid, carboxylate, halo, sulfonic acid, sulfonate, or alkyl substituted with one or more halo, sulfonic acid, sulfonate, carboxylic acid or carboxylate groups;
x is an integer equal to or greater than 2;
y is equal to or greater than 1, with the proviso that the ratio of x to y is greater than about 2; and
z is an integer equal to or greater than about 5.

In the most preferred embodiments of this invention, the polyaniline is derived from unsubstituted aniline, or alkyl, alkoxy, sulfonic acid or sulfonate substituted aniline.

The number of repeat units in the polyaniline may vary widely. In general, the greater the number of aniline repeat units the greater the viscosity and molecular weight of the polyaniline. In those embodiments where a polyaniline of lower molecular weight and viscosity is required, such material may be used; and in those applications where a polyaniline of higher molecular weight and viscosity is required, then such material can be used. The number of aniline repeat units may be as low as 2 or 3 but is preferably at least about 10. The upper limit can vary depending on the required viscosity and molecular weight. In the more preferred embodiments of the invention, the number of aniline repeat units is at least about 20, and in the particularly preferred embodiments, the number of repeat units is at least about 30. Amongst the particularly preferred embodiments, most preferred are those embodiments in which the number of repeat units is at least about 40.

Useful polyanilines can be prepared through use of chemical and electrochemical synthetic procedures. For example, one form of polyaniline can be prepared by treating aniline with ammonium persulfate $(NH_4)_2S_2O_8$ in excess 1M HCl. This powdered form of polyaniline is blue green in color. After methanol washing and air drying this material exhibits a conductivity of about 10 S/cm. This conductive form of polyaniline can be treated with ammonium hydroxide in ethanol to form a non-conductive form of polyaniline which is dark blue in color and which has a conductivity equal to or greater than about $10^{-10}$ S/cm. Other chemical procedures for preparation of various chemical forms of polyaniline are described in detail in Green et al. described above.

Useful forms of polyaniline can also be prepared electrochemically. For example, useful forms of polyaniline can be prepared by the electrochemical oxidation of aniline in aqueous fluoroboric acid electrolyte on a platinum foil anode.

Other chemical and electrochemical syntheses and transformations of the conductive form of polyaniline may be discovered and are presently contemplated as being useful. Moreover, additional forms or types of polyaniline may be elucidated in the future. Accordingly, no limitation to the syntheses, transformation, or structures herein described or postulated is intended beyond the limitations of the appended claims.

The second essential ingredient of the solution or plasticized composition of this invention is one or more Lewis base/dopant complexes. The purpose of the dopant component of the complex is to dope the polyaniline and render it electrically conductive on release of the dopant from the complex and/or removal of the solvent and/or Lewis base from the solution or composition. While we do not wish to be bound by any theory, it is believed that such dopant solute is derived from a compound, which upon addition to the polyaniline, ionizes the polymer via oxidative electron transfer or protonation with co-committent formation of a dopant solute species to form a charge transfer complex with polyaniline, which complex has a conductivity equal to or greater than about $10^{-10}ohm^{-1}cm^{-1}$, preferably equal to or greater than about $10^{-4}ohm^{-1}cm^{-1}$, more preferably equal to or greater than about $10^{-2}ohm^{-1}cm^{-1}$ and most preferably equal to or greater than about $10^{-1}ohm^{-1}cm^{-1}$.

Dopants for use in the practice of this invention can vary widely and can be such materials which are known in the art for use in doping conjugated backbone polymers to form conductive or semiconductive polymers, as for example, those described in detail in U.S. Patent Nos. 4,442,187 and 4,321,114 which are hereby incorporated by reference. Illustrative of useful dopant species are oxidizing dopants. Oxidizing dopants are well known in the conductive polymer art, and any of such known oxidizing dopants can be used. Illustrative of useful oxidizing dopants are $AsF_5$, $MoOCl_4$, $MoCl_5$, $PCl_5$, $POCl_3$, $PCl_3$, $AlCl_3$, $NO^+$ and $NO_2^+$ salts (such as $NOBF_4$, $NOPF_6$, $NOSbF_6$, $NOAsF_6$, $NOCH_3CO_2$, $NO_2BF_4$, $NO_2PF_6$, $NO_2AsF_6$, $NO_2SbF_6$, and $NO_2CF_3SO_2$), $HClO_4$, $HNO_3$, $H_2SO_4$, benzoylperoxide, $SO_3$, $Br_2$, $(FSO_3)_2$, $FSO_3H$, and Fe(III) salts (such as $Fe(BF_4)_3$, $FeBr_3$, $Fe(CH_3SO_3)_3$, $Fe(ClO_4)_3$, $FeCl_3$, $Fe(OTs)_3$, and $Fe(CF_3SO_3)_3$ which give rise to doped polymers containing dopant solutes such as $NO_3^-$, $CH_3SO_3^-$, $AlCl_4^-$,$BF_4^-$, $PCl_4^-$, $PF_6^-$, $AsF_6^-$, $SbF_6^-$, $CF_3SO_3^-$, $ClO_4^-$, $OTs^-$, $SO_3^-$, $C_6H_5CO_2^-$, $CH_3SO_3^-$, $FSO_3^-$, and $FeCl_4^-$. Other useful oxidizing dopants include electrolyte salts such as $LiClO_4$,$LiBF_4$, $LiAsF_5$, $NaPF_6$, $Bu_4NClO_4$, $Bu_4NOTs$, $Bu_4NCF_3SO_3$, $LiCF_3SO_3$, AgOTs, and the like. Preferred oxidizing dopants for use in the practice of this invention are oxidizing dopants selected from the group consisting of $MoOCl_4$, $MoCl_5$, $PCl_5$ and Fe (III) salts such as $Fe(ClO_4)_3$, $FeCl_3$, $FeBr_3$, and Fe(CF3SO3)3, and particularly preferred oxidizing dopants for use in the practice of this invention are dopants selected from the group consisting of $MoOCl_4$, $MoCl_5$, and Fe (III) salts such as $Fe(ClO_4)_3$, $FeCl_3$, $FeBr_3$, and $Fe(CF_3SO_3)_3$, and particularly preferred oxidizing dopants for use in the practice of this invention are dopants selected from the group consisting of $MoOCl_4$, $MoCl_5$, and $FeCl_3$. Amongst these particularly preferred embodiments, most preferred oxidizing dopants are those embodiments in which the oxidizing dopant is $FeCl_3$.

Illustrative of still other dopants are protonic acid dopants. Such dopants include inorganic acids such as hydrofluoric acid, hydriodic acid, hydrochloric acid, phosphoric acid, nitric acid, boric acid, fluoroboric acid, sulfuric acid, and the like.

Illustrative of still other useful dopants are protonic acids or acid derivatives thereof such as those containing anionic moieties of the formula:

$$R_1(PO_3^{=})_r(PO_2^{-}R_1)_r(PO_3Hc^{-})_r(BO_2^{=})_r\ (SO_3^{-})_r(CO_2^{-})_r(BO_2H^{-})_r$$

and having one or more cationic moieties selected from the group consisting of:

$$M^{+s}$$

wherein:

- $R_1$ is the same or different at each occurrence and is an organic radical or amino group;
- M is a species having a positive charge equal to s;
- s is a positive integer equal to or greater than 1, preferably from 1 to about 8; and
- r is the same or different at each occurrence and is 0 or a positive integer equal to or greater than 1, with the proviso that at least one of r is other than 0.

The $R_1$ group may vary widely and can be amine or a substituted or unsubstituted aliphatic radical such as alkyl, nitroalkyl, alkylamine, dialkylamine, perfluoroalkyl, alkoxyalkyl, alkoxy, haloalkyl and the like, or a substituted or unsubstituted aromatic radical such as phenyl, indanyl, benzyl, biphenyl, benzhydryl, halophenyl, nitrophenyl, anthracyl, naphthyl, phenylamine, diphenylamine, phenanthryl and the like, or a substituted or unsubstituted heteroaromatic or heteroaliphatic radical such as pyrrolidyl, piperidyl, benzofuryl, benzopyranyl, carbazoyl, triazyl, imidazolyl, isoxazolyl as the like. $R_1$ may also be a polymeric or oligomeric radical such as a polymer having recurring pendant phenyl groups in the polymeric backbone substituted with sulfonic acid and derivatives thereof such as salts, phosphoric acid and derivatives thereof such as salts, phosphonic acid and derivatives thereof such as salts, sulfinic acid and derivatives thereof such as salts, carboxylic acid and derivatives thereof such as salts, boric acid and derivatives thereof such as salts, or phosphonic acid and derivatives thereof such as salts; moieties such as sulfonated or phosphonated polystyrene, poly(2-methylstyrene), poly(4- phenylstyrene), poly(2-vinyl naphthalene), poly(vinyl benzoate), poly(benzyl methacrylate) and the like. In the particularly preferred embodiments of the invention, $R_1$ is an aromatic radical and in the most preferred embodiments $R_1$ is substituted or unsubstituted phenyl or naphthyl. The nature of the $M^{+n}$ group may vary widely. For example, $M^{+n}$ may be be a non-metal cation such as $Bu_4N^+$, $H^+$, $NO^+$, $NO_2^+$, $NH_4^+$ and the like, or may be a metal cation such as $Na^+$, $Li^+$, $Ag^+$, $Ba^{+2}$, $Co^{+3}$, $Al^{+3}$, $Fe^{+3}$ and the like.

Preferred for use in the practice of this invention are organic acid dopants, more preferably totally or partially protonized forms of those having anionic portions of the formulas:

$$R_1(PO_3^{=})_r(PO_2^{-}R_1)_r(PO_3H^{-})_r(BO_2^{=})_r(SO_3^{-})_r(CO_2^{-})_r(BO_2H^{-})_r$$

where $R_1$ and r are as described above.

More preferred for use as dopants in the practice of this invention are acids or acid derivatives of the formula:

$$R_6(BO_2M_2)_g(PO_3M_2)_f\ (SO_3M)_c\ (CO_2M)_d$$

or

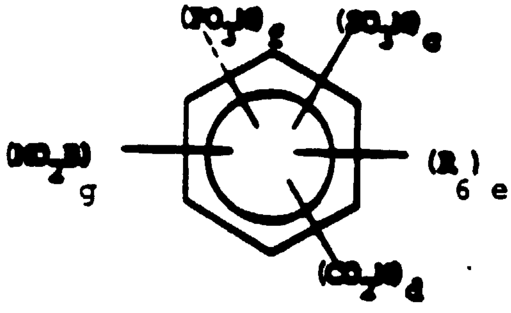

wherein:

M is a metal or hydrogen or other non-metal cation;
c is 0, 1, 2, 3 or 4;
d is 0, 1 or 2;
e is 0, 1 or 2
f is 0, 1 or 2;
g is 0, 1 or 2, with the proviso that at least one of c, d, f and g is other than 0; and
$R_6$ is nitro, cyano, hydroxy, halo, amido, sulfinic acid, amino, alkylamino, dialkylamino, arylamino, diarylamino, sulfinate, phosphonic acid, phosphonate, phosphinic acid, phosphinate, alkylarylamino, substituted or unsubstituted alkoxy, alkoxyalkyl, aryl or alkyl having from 1 to about 30 carbon atoms wherein permissible substituents include perhaloalkyl, phenyl, alkoxy, halo, cyano, sulfate, haloalkyl, hydroxy, sulfonate, sulfonic acid, phosphate, phosphoric acid, boric acid, sulfinate, borate, phosphonic acid, phosphonate, phosphinic acid, phosphinate, sulfinic acid, quaternary ammonium, carboxylic acid, nitro, carboxylate and the like, or any $R_6$ may form an alkylene, alkynylene or alkenylene chain completing aromatic, heteroaromatic, alicyclic or heteralicyclic ring a fused-ring system which chain may include one or more oxygen, nitrogen, ester, sulfur, carbonyl or a combination thereof and/or which chain may be unsubstituted or substituted with one or more halo, phosphoric acid, hydroxy, boric acid, amino, alkylamino, dialkylamino, arylamino, alkyl diarylamino, alkylarylamino, nitro, cyano, sulfinate, phosphoric acid, sulfinic acid, phosphate, amido, alkoxy, carboxylate, phosphonic acid, phosphonate, sulfonate,borate, sulfonic acid or carboxylic acid groups, or $R_6$ is a moiety of the formula:

$$-(CH_2)_qCF_3, -(CF_2)_qCF_3, (CH_2)_q CH_3 -(OCH_2CH_2)_qOCH_3 \text{ or } -(OCH_2CH(CH_3))_q OCH_3$$

wherein:
q is a positive whole number from 1 to about 10; and
In the particularly preferred embodiment of this invention, useful dopants are acids of the above formula:

$$R_6(BO_2M_2)_g(PO_3M_2)_f(SO_3M)_c(CO_2M)_d$$

or

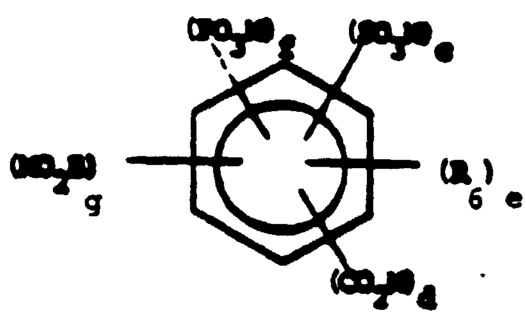

wherein:

c is 0, 1, 2 or 3;
d is 0 or 1;
e is 0 or 1;
f is 0 or 1;
g is 0 or 1, with the proviso that at least one of c, d, f and g is other than 0;
$R_6$ is amino, alkylamino, dialkylamino, arylamino, diarylamino, arylalkylamino, alkyl, halo, hydroxy, aryl, phenyl, haloalkyl, perhaloalkyl, cyano, nitro, alkoxy, boric acid, borate, phosphonate, phosphonic acid, carboxylate, sulfonate, phosphate, sulfonic acid, carboxylic acid, phosphoric acid, sulfinic acid, sulfinate or substituted or unsubstituted aryl alkyl wherein permissible substituents are selected from the group consisting of amino, alkylamino, dialkylamino, arylamino, diarylamino, arylalkylamino, alkyl, halogen, hydroxy, phenyl, haloalkyl, amido, perhaloalkyl, cyano, nitro, alkoxy, boric acid, borate, phosphonate, phosphonic acid, carboxylate, phosphinic acid, sulfonate, phosphate, sulfonic acid, carboxylic acid, phosphinate, phosphoric acid, sulfinic acid or sulfinate or any $R_6$ may form an unsubstituted or substituted alkenylene chain completing a naphthalene, anthracene or phenanthracene fused ring system or $R_6$ is a moiety of the formula:

$$(OCH_2CH_2)_qOCH_3,\ (OCFH_2CH(CH_3))_q\ OCH_3,\ (CH_2)_qCF_3,\ (CF_2)qCF_3 \text{ or } (CH_2)q\ CH_3$$

wherein:

q is a positive whole number from 1 to about 10;
M is a cation such as $NO^+$, $NO_2^+$, Fe(III), $H^+$, Pb(IV), Ce(IV), Al(III), Sr(IV), Cr(VI), Mn(VII), Co(III), Au(III), Os(VIII), Na(I), Li(I), K(I) or $Bu_4N(I)$.

In the most preferred embodiments of this invention, useful dopants are acids of the formuala:

$$R_6(SO_3M)_c\ (CO_2M)_d$$

or

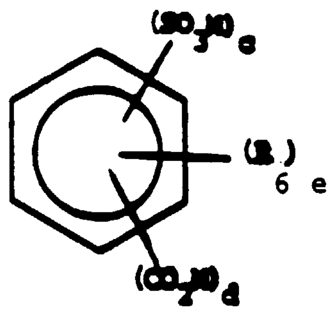

wherein:

c is 1, 2 or 3;
d and e are the same or different and are 0 or 1;
$R_6$ is fluoro, alkoxy, amino, biphenyl, alkylamino, arylamino, dialkylamino, diarylamino, alkylarylamino, hydroxy, nitro, cyano, alkyl, phenyl, alkyl or phenyl substituted with one or more alkyl, alkoxy, fluoro, fluoroalkyl, sulfonic acid, sulfonate, perfluoroalkyl, carboxylate, hydroxy, nitro, cyano, or carboxylic groups or any $R_6$ may form an unsubsituted or substituted alkenylene chain completing a naphthalene, anthracene or phenanthracene fused system which may be substituted with one or more alkyl, alkoxy, fluoro, perfluoroalkyl, fluoroalkyl, sulfonic acid, sulfonate, carboxylic acid, carboxylate, hydroxy, nitro or cyano groups; and
M is a cation.

The following is a listing of dopants which are useful in the practice of the most preferred embodiments of this invention for formation of the dopant solute.

1-anthracene sulfonic acid,
9-anthracene sulfonic acid,
2-phenanthracene sulfonic acid,
3-phenanthracene sulfonic acid,
9-phenanthracene sulfonic acid,
$NO_2CF_3SO^-_3$,
$CF_3SO_3H$,
perflouro octyl sulfonic acid perfluoro octyl carboxylic acid octylsulfonic acid,
dodecylsulfonic acid,
cetylsulfonic acid,

toluenesulfonic Acid (TsOH),
$Fe(OTs)_3$,
$Fe(CH_3SO_3)_3$,
$(FSO_3)_2$,
AgOTs,
$Me_3SiOTs$,
dodecylbenzene sulfonic acid,
naphthalene sulfonic acid,
benzene disulfonic acid,
benzene sulfonic acid,
1,3-benzene disulfonic acid,
2,5-dihydroxy-1,4-benzene disulfonic acid,
camphor sulfinic acid naphthalene trisulfonic acid dodecylbenzene sulfonic acid,
isoethionic acid,
1,5-naphthalene disulfonic acid,
nickel phthalocyanine tetrasulfonic acid,
phenyl phosphonic acid,
poly(vinyl sulfonic acid),
3-sulfopropyl acrylate,
3-sulfopropyl methacrylate,
sulfamic acid,
5-sulfosalicyclic acid,
(4,5-dihydroxy-1,3-benzene disulfonic acid),
vinyl sulfonic acid,
sulfanilic acid,
4-sulfophthalic acid,
sulfoacetic acid,
methyl orange,
sulfonated polystyrene,
sulfonated poly(a-vinyl naphthalene),
naphthol yellow,
naphthol blue black,
1,2-naphthoquinone-4-sulfonic acid,
naphthylazoxine S,
1-octane sulfonic acid,
t-butyl phosphonic acid,
ethyl phosphonic acid,
butyl phosphonic acid,
1,2-benzene disulfonic acid,
4-octylbenzene sulfonic acid,
2-mesitylene sulfonic acid,
2,6-naphthalene disulfonic acid,
2-naphthalene sulfonic acid,
1,3,6-naphthalene trisulfonic acid,
1,3,7-naphthalene trisulfonic acid,
sulfonazo III acid,
biphenyl disulfonic acid,
biphenyl sulfonic acid,
1,8-dihydroxynaphthalene-3-6-disulfonic acid,
3,6-dihydroxynaphthalene-2,7-disulfonic acid,
4,5-dihydroxynaphthalene-2,7-disulfonic acid,
6,7-dihydroxy-2-naphthalene sulfonic acid,
1-naphthalene phosphoric acid,
1-naphthalene sulfonic acid,
1-naphthalene-5,7-dinitro-8-hydroxy sulfonic acid,
1-naphthalene-4-hydroxy sulfonic acid,
4-bromo benzene sulfonic acid,
4-hydroxy-5-isopropyl-2-methyl benzene sulfonic acid

3,4-diamino benzene sulfonic acid benzenephosphoric acid,
1,3,5-benzene trisulfonic acid,
2-methyl-5-isopropyl benzene sulfonic acid,
3,4-dinitro benzene sulfonic acid,
2-methoxy benzene sulfonic acid,
l-naphthalene-5-hydroxy sulfonic acid,
l-naphthalene-7-hydroxy sulfonic acid,
1-naphthalene-3-hydroxy sulfonic acid,
2-napthalene-1-hydroxy sulfonic acid,
4-phenylamino benzene sulfonic acid,
1,6-naphthalene disulfonic acid,
1,5-naphthalene disulfonic acid,
1,3-naphthalene-7-hydroxy disulfonic acid, and $Me_3SiOSO_2CF_3$.

The amount of dopant included in the complex is not critical and may vary widely. In general, sufficient dopant is included in the complex such that an amount of dopant is released from the complex on removal of the Lewis based and/or solvent from the complex and/or from the solution and/or composition such that the polyaniline is doped the desired extent, usually an amount such that the polyaniline is doped to a conductivity of at least about $10^{-10}$ $ohm^{-1}cm^{-1}$. The upper level of conductivity is not critical and will usually depend on the type of aniline polymer employed. In general, the highest level of conductivity obtained is provided without unduly adversely affecting the environmental stability of the polymer. In the preferred embodiments of the invention the amount of dopant employed is sufficient to provide a conductivity of at least about $10^{-6}ohm^{-1}cm^{-1}$ and in the particularly preferred embodiments is sufficient to provide a conductivity of from about $10^{-4}ohm^{-1}cm^{-1}$ to about $10^{+2}ohm^{-1}cm^{-1}$. Amongst these particularly preferred embodiments, most preferred are those embodiments in which sufficient dopant is employed to provide a conductivity of at least about $10^{-1}ohm^{-1}cm^{-1}$ to about $10^{+2}ohm^{-1}cm^{-1}$, with amounts sufficient to provide a conductivity from about $10^{0}ohm^{-1}cm^{-1}$ to about $10^{+2}ohm^{-1}cm^{-1}$ usually being the amounts of choice.

The second component of the Lewis base/dopant complex is a Lewis base other than piperidine, an excess of which forms the third essential component of the solutions of this invention and functions as a solvent or plasticizer. The Lewis base has several essential characteristics. The base has a $pK_a$ greater than that of the polyaniline in the solution or the composition; the base must be capable of complexing with the dopant in the electrically conductive polyaniline in the presence of the polyaniline to form a dopant/Lewis base complex; and the base must a liquid under use conditions and be a solvent for the neutral undoped polyaniline and for the dopant/Lewis base complex.

The $pK_a$ for the conjugate acid of the neutral (undoped) form of polyaniline is estimated to be in the range of 5.4 ± 0.4. The $pK_a$ for the conjugate acid of the nuetral form of the polyaniline (n = 4, m = 0, x = 2, y = 1 and Z > 1 of the Formula III) is estimated to be in the rane of 5.4 =0.4. The $pK_a$ of the conjugate acid of the Lewis base component of the complex is then preferably greater than 5.4., more preferably greater than 6 and most preferably greater than 9.

The Lewis base is such that it can be removed from the complex releasing the dopant to dope the polyaniline and preferably is removable from the solution or the composition. Lewis bases can be removed from the complex by any suitable means as for example chemical reaction, extraction, volatilization and the like.

The Lewis base is preferably a relatively volatile liquid which enhances the quality of conductive polyaniline articles formed from the solution or plasticized composition. As used herein, "volatile" means that the Lewis base is a liquid and has a boiling point of less than about 300 °C under use conditions preferably at atmospheric or autogenous pressure. The lower boiling point is not critical and usually those bases with the lowest boiling point are employed, provided that the base is in the liquid state under use conditions. The boiling point of the Lewis base may vary and is preferably less than about 250°C, more preferably from about 30 to about 150°C most preferably from about 35 to about 100°C.

Illustrative of suitable Lewis bases are secondary, primary and tertiary aromatic and aliphatic amine and phosphine compounds and polymers such as morpholine, 4-aminomorpholine, 2-picoline, methyl amine, pyridine, pyrrolidine, 4-picoline, piperazine, allylmethylamine, aniline, dibutylamine, diethylamine, diisopropyl amine, dipropylamine, benzylamine, cyclohexylamine, 1-aminopiperidine, 2,3-cylohexenopyridine, 1-(3-aminopropyl)-2-pipicoline, 1,1-dimethylhydrazine, amylamine propylamine, butylamine, ethylenediamine, N,N-dimethylethylene diamine, N,N'-dimethyl-ethylenediamine, 2-(ethylamino)ethanol, tetrahydrofurfurylamine, 2-(methylamino)pyridine, 1,2,3,4-tetrahydroisoquinoline, 2-imidazolidine, imidazole, ammonia, ethylene diamine, cyclohexylamine, hexamethylenediamine, and the like. Other suitable Lewis bases are amide and phosphoramide compounds with $pK_a$ greater than about 5.4 including 2-pyrrolidone, 2-oxazolidone, hexamethyl phosphoramide and the like.

In the preferred embodiments of the invention, the Lewis base of choice is selected from the group consisting of amines and amides. In the most preferred embodiments of the invention, the Lewis base of choice is selected from the group consisting of amines and diamines. Such amines and diamines are most preferred because they are liquid at room temperature, complex with the preferred protonic acid dopants, are good solvents for the neutral polyaniline

and for amine acid salts, and are relatively volatile so that on casting of the solution in the desired form they evaporate to form the desired article. Most preferred Lewis bases are amines and diamines such as pyrrolidine, 2-picoline, 2,3-cyclohexenopyridine, 2-(methylamino)pyridine, tetrahydroquinoline, 2-(ethylamino)ethanol, N,N-dimethylethylene diamine, N,N'-dimethylethylene diamine, ethylene diamine, benzylamine, morpholine, tetrahydrofurfurylamine and the like.

The amount of Lewis base may vary widely but is usually at least an amount which is sufficient to complex with sufficient dopant to form the desired amount of the electrically conductive polyaniline on release of the dopant from the complex, and which is sufficient to dissolve some amount of the dopant/Lewis base complex and the neutral polyaniline. In general, the greater the amount of dopant and polyaniline, and the lower the solubility of the dopant/Lewis base complex and neutral polyaniline in the Lewis base liquid, the greater the amount of Lewis base required to form the dopant/Lewis base complex and to dissolve the complex and neutral polyaniline to the desired extent; conversely, the smaller the amount of dopant and polyaniline and the greater the solubility of the dopant/Lewis base complex and non-conductive polyaniline in the liquid Lewis base, the smaller the amount of Lewis base required to complex the dopant and to solvate the desired amount of complex and non-conductive polyaniline. Preferably, the amount of Lewis base is at least about 50 mole percent and more preferably at least about 100 mole percent based on total moles of polyaniline repeat units in the polyaniline.

Preferred Lewis bases have a relatively strong hydrogen bonding capability. The degree of hydrogen bonding capability can be assessed by a variety of techniques. One method which we find to be most predictive of suitable Lewis base liquids for the present invention is that Craver, J. Appl. Polym Sci. 14, p. 1755 (1970). This method is based upon the relative sound velocity ($g_w$) in paper wetted by the solvent, where water is arbitrarily assigned a value of 100. By this measure, suitable Lewis base liquids are those which have a hydrogen bonding capability greater than about 50, and more preferably greater than about 60.

Another useful measure of suitable Lewis base liquids is the solibility parameter of the liquid, also referred to as the Hildebrand Parameter (d). Preferred Lewis base liquids have a Hildebrand Parameter which lies in the range of from about 17 to about 29, more preferably in the range of from about 18 to about 26, and most preferably in the range of from about 19 to about 25.

An even more useful measure of suitable Lewis base liquids is based on dividing the Hildebrand Parameter of the liquid into separate contributions from dispersion ($d_d$), from polar interactions ($d_p$), and from hydrogen bonding interactions ($d_h$) In this scheme (which is disclosed in "Handbook of Solubility Parameters and Other Cohesion Parameters", by Allan F.M. Barton (CRC Press, 1983) pp 141-162, 94-110), the Hildebrand Parameter is related to the contributions from dispersion ($d_d$), polar interactions ($d_p$) and hydrogen bonding ($d_n$) ("Hansen Parameters") by the relation

$$d^2=d_d^{\ 2}+d_p^{\ 2}+d_h^{\ 2}$$

For example, in order to judge the suitability of a Lewis base liquid for polyaniline, we have emprirically determined solubility parameters for the neutral (or base) form of the polyaniline which contains approximately a 50/50 ratio of amine to imine nitrogen linkages (Formula III where the ratio of x and y equals about 2 and z > 1) as follows:

$d_d$ = 17.4 MPa
$d_p$ = 8.5 MPa
$d_h$ = 10.4 MPa
d = 22.0 MPa

If we define a quantity (r) as:

$$r= [4(17.4-d_d)^2 + (8.5-d_p)^2 + (10.4 -d_h)^2]$$

where $d_d$, $d_p$ and $d_h$ are the Hansen Parameters for a perspective Lewis base solvent for polyaniline base, then suitable solvents are those for which r is less than about 7, more preferably less than about 6, and most preferably less than about 5.

When employing mixtures of Lewis base solvents, an average set of Hansen Parameters can be calculated using the techniques of matrix algebra. Suitable solvent mixtures are then those whose average values of $d_d$, $d_h$, and $d_p$ lead to a value of r which is less than about 7.

In addition to the essential polyaniline, Lewis base/dopant complex and liquid Lewis base, the solutions and compositions of this invention can include other optional ingredients which either dissolve or do not dissolve in the solution. The nature of such optional ingredients can vary widely, and include those materials which are known to those of skill

in the art for inclusion in polymer articles. In the case of dissolvable components, materials may be present which alter the physical or mechanical properties of either the solution or the articles eventually cast from the solution. Examples of such materials include salts such as LiCl, LiBr, $LiCF_3SO_3$, $LiCH_3(C_6H_4)SO_3$, $KCF_3(CF_2)_2SO_3$, and the like which may promote solubility or provide dopant anions to the polyanilines. Other examples of such materials include other conventional polymers such as polycarbonate, polyacrylonitrile, polyvinyl chloride, polyvinylidene chloride, polyvinylidene fluoride, polyvinyl alcohol, poly(metaphenylene isophthalamide), polyethylene oxide, polystyrene, nylon 6, cellulose, nylon 66, nylon 12, poly(l,4-cyclohexylidene dimethylene terephthalate), nylon 6,10, nylon 4, poly(phenylene sulfide), poly(ethylene terephthalate), poly(2,6-dimethyl-1,4-phenylene oxide), poly(2,6-diphenyl-1,4-phenylene oxide), sulfonated polystyrene, poly(acetate butyrate), poly(4-aminobutyric acid), poly(hexamethylene adipamide), poly (p-phenylene terephthalamide), poly(tetrafluoroethylene), poly[methane bis(4-phenyl)carbonate], poly(p-phenylene terephthalamide), polypropylene, polyethylene, cellulose acetate, poly(ethylene oxybenzoate), poly(p-hydroxy benzoate), polyphenylene oxide, polyvinyl alcohol, and the like. These fourth components include other conductive polymers, such as conjugated backbone polymers as for example polyacetylene, poly(dialkoxy phenylene vinylene), poly (thiophene) poly(thienylene vinylene), poly(pyrrole), poly(furan), poly(phenylene), poly(phenylene vinylene) and the like which may become conductive upon doping, graphite, metal conductors, reinforcing fibers and inert fillers (such as clays and glass). In the case of nonsoluble fourth components, materials may be present which either fill or form a substrate for the conductive polymer cast from the solution.

The proportion of polymer, complex and solvent in the solution or plasticized composition of this invention containing the substituted or unsubstituted polyaniline homopolymer or copolymer, the Lewis base/dopant complex and the Lewis base solvent are not critical and can vary widely, such that the composition varies from a solution to a plasticized composition. However, the following guidelines are believed important for achieving solutions and plasticized compositions particularly useful in the present invention. In general, the amount of solvent as a proportion of the amount of solution is not believed to be critical, since any amount as a liquid will form at least a viscous gel or a plasticized composition with the polymer. These viscous gel embodiments of the invention are particularly useful for silk screening conductive circuitry and for applying thick film coatings on substrates. For other applications, it may be preferred, however, to use sufficient liquid to lower the viscosity of the gel composition or solution to a point where it flows at least sufficiently to conform to a container shape or mold in a reasonably short period of time, e.g., in 30 minutes or less. Preferably, the solvent is present in sufficient amounts to lower the viscosity of the solution to less than about 10,000 centipoise or preferably from about 1 to about 1000 centipoise.

The method of forming the solutions or plasticized compositions of this invention is not critical and can vary widely. For example, one preferred method of forming the present solution and plasticized composition containing the substituted or unsubstituted polyaniline or copolymer is to add the polyaniline doped with a suitable dopant such as toluenesulfonic acid to a suitable Lewis base or combination of Lewis bases such as pyrrolidine in a mixing vessel. While we do not wish to be bound by any theory, it is believed that a portion of the Lewis base complexes with the dopant for the polyaniline forming the Lewis base/acid complex and neutral polyaniline. Another portion of the Lewis base then dissolves the complex and the neutral polyaniline or plasticizes the polyaniline. In use, the solution can be placed in any desired configuration, as for example on the surface of a substrate, in the shape of an article and the like. As the Lewis base is removed such as by volatilization, the complex decomposes releasing the dopant which then dopes the polyaniline forming the doped electrically conductive polyaniline in the desired configuration. As used herein, "to complex" means to form an association between the dopant and Lewis base such as a conjugate acid base pair of the Lewis base and the acid dopant of the electrically conductive polyaniline.

Another preferred method is to dissolve and react, simultaneously, the undoped polymer, the dopant and the Lewis base as a liquid. Thus, for example, by introducing an undoped powdered polyaniline such as a polyaniline of the Formula III, $y>1$, $x>1$ and $z>1$, or a mixture of a polyaniline of the Formula III ($x=0$ and y and $z>1$) (pernigraniline form) and a polyaniline of the Formula IV (leuco form), a suitable Lewis base solvent, such as propylamine, morpholine or pyrrolidine as a liquid Lewis base and a dopant such as toluene sulfonic acid, dodecylbenzene sulfonic acid, and naphthalene disulfonic acid as a solid into a mixing vessel, a solution of the polymer and dopant/Lewis base complex is quickly formed, from which conductive polymer can be cast. Similarly, undoped polyaniline in the leuco form of the Formula IV can be added to a mixing vessel with a suitable Lewis base such as pyrrolidine or morpholine and a suitable oxidizing dopant such as $NOSbF_6$, $FeCl_3$ or a mixture of an acid and an oxidizing agent such as a mixture of toluenesulfonic acid and oxygen to form the claimed solution or composition from which the conductive polyaniline can be cast. The conditions of such mixing are not critical, provided that sufficient toluenesulfonic acid is used to dope the desired quantity of polyaniline and sufficient morpholine or pyrrolidine is employed to reduce the viscosity of the solution to manageable levels. An alternate technique of preparing the solution or plasticized composition of this invention containing the doped polymer is to mix first the polyaniline and the Lewis base solvent, and thereafter add the dopant to the solution. Thus, for example, if undoped polyaniline (base) powder is admixed with a Lewis base solvent such as pyrrolidine, morpholine or the like, the addition of a suitable dopant to this suspension, such as toluenesulfonic acid, dodecylbenzenesulfonic acid, and naphthalenedisulfonic acid causes the Lewis base solvent and dopant to complex

and if the dopant itself is insoluble, almost instantaneously thereafter, causes the complexed dopant and base to go into solution or from the composition.

Various methods are contemplated for using the solution or plasticized composition of the present invention. The Lewis base solvent can be removed from the solution or plasticized composition through use of any conventional solvent removal method but is removed preferably by evaporation to form a conductive polyaniline. Alternatively, the Lewis base solvent can be removed by extraction with an extractant in which the Lewis base solvent is substantially more soluble than the doped polymer.

As will be appreciated by those skilled in polymer processing, the ability to form polymer articles by removing a solvent from a solution or plasticized composition enables one to prepare articles of a wide variety of shapes and sizes. Thus, for example, by removing volatiles from the present solution or plasticized composition spread on a surface, films and coatings of any desired thickness can be prepared. Extremely thin films and coatings can be prepared which are substantially transparent. By extruding the solution or plasticized composition through a die, fibers or films can be made. Similarly, by removing volatiles from the solution or plasticized composition in a mold of various shapes, shaped articles conforming in shape to the mold can be prepared. It will be appreciated that some shrinkage might occur between the solution or plasticized composition in it's last flowable state to the final article, but such shrinkage is conventionally accounted for in molding polymers from solution or plasticized composition. It is also contemplated that, once a solution or plasticized composition is formed, a partial or substantial removal of solvent will occur prior to placing the solution or plasticized composition on a surface or in a mold, with the final removal of solvent occurring on the surface or in the mold. It is contemplated that, if additional soluble components are introduced into the solution, they will, unless also volatile, be present in the shaped article formed. If the additional component is a non-volatile liquid, then the removal of very volatile components may leave a new liquid or plasticized form of doped conducting polymer or undoped neutral polymer. If the additional components are volatile, then foamed or expanded cellular forms of the polymer may be formed.

In the event that additional non-soluble components are present (or suspended) in the solution, the doped polymer will form around, or be filled with, the insoluble material. If, for example, the additional components are glass fibers, the relative amounts of fibers and doped polymer remaining will cause either the polymer to be fiber-filled, the fibers to be polymer coated or impregnated, or some intermediate composite of fibers and doped polymer to be formed. In the case of systems wherein the amount of non-soluble component greatly exceeds the doped polymer remaining, individual particles or shapes of non-soluble components coated or impregnated with doped polymer will be formed.

Examples of articles formed from non-soluble components and the present polymer solutions include conductive polymer coated-housings for sensative electronic equipment (microprocessors), infrared and microwave absorbing shields, flexible electrical conducting connectors, conductive bearings, brushes, semiconducting junctions, photocells, antistatic materials for packaging electronic components, carpet fibers, waxes and tiles for floors in computer rooms and an antistatic spray finisher for plastics, and thin, optically transparent antistatic finishes for CRT screens, aircraft or automobile display panels, and the like.

A third application for the present polymer solutions is in the doping of other materials, and especially other conjugated backbone polymers which could also be doped by the electron-acceptor dopant alone. Such doping may occur as a part of the process of casting the polymer solution onto the second polymer article, but may also be accomplished without, necessarily, casting the conductive polymer from the solution.

The following specific examples are present to illustrate the invention and are not to be construed as limitations thereon.

EXAMPLE 1

Into a solution containing 1770ml of $H_2O$, 50g of aniline (0.54 mole) and 172g of p-toluenesulfonic acid (0.90 mole), was added dropwise at 15°C a solution of ammonium persulfate (153.4g in 336.5 ml $H_2O$) over a period of 40 minutes. The reaction was then allowed to continue at 15°C for 0.5 hours.

The resulting solid percipitate was collected and washed with 6L of an aqueous toluene sulfonic acid solution (10 wt%) and then by 3L of methanol. The resultant blue-black solid was dried in air for 25hrs and dried at 130°C for 3hrs under dynamic vacuum to give poly(anilinium tosylate) as a green powder.

The yield was 78g. The intrinsic viscosity (in $H_2SO_4$, at 25°C) was 0.66dl/g. Elemental analysis of the dried green powder gave:

C:64.37%(wt%) H:486% N8.59%
S:8.40% O:13.51%
moisture: less than 0.8 wt%.

The conductivity of the dried and pressed pellet was 5/$Scm^{-1}$ by the co-linear four probe method. The conductivity

of the moisture-saturated pellet was 20/$Scm^{-1}$.

EXAMPLE 2

Various amines were evaluated for their ability to dissolve the poly(anilinium tosylate) prepared in Example 1. The experiments were conducted by mixing 2 mg of poly(anilinium tosylate) with 1 ml of amine. The results are set forth in the following Table 1.

In Table 1, the abbreviations are defined as follows:

(a) "VS" is very soluble.
(b) "S" is soluble.
(c) "SS" is slightly soluble.
(d) "I" is insoluble.

TABLE 1

| Amine Liquid | Solubility |
|---|---|
| triethylamine | I |
| tripropylamine | I |
| tributylamine | I |
| triisobutylamine | I |
| pyridine | I |
| 2-picoline | S |
| 3-picoline | I |
| 4-picoline | SS |
| 2,6-lutidine | I |
| 2,3-cyclopentenopyridine | I |
| 2,3-cyclohexenopyridine | S |
| 2,4,6-collidine | I |
| 2-bromopyridine | I |
| 2-(methylamino)pyridine | SS |
| 1-(3-aminopropyl)-2-pipecoline | S |
| quinoline | I |
| isoquinoline | I |
| tetrahydroisoquinoline | SS |
| tetrahydroquinoline | I |
| imidazole | S |
| aniline | I |
| 2-ethylaniline | I |
| N-methylaniline | I |
| diethylamine | I |
| dipropylamine | I |
| diisopropylamine | I |
| dibutylamine | I |
| diisobutylamine | I |
| dipentylamine | I |
| N,N-dimethylethylenediamine | S |
| N,N'-dimethylethylenediamine | S |
| ethylenediamine | S |
| 1,1-dimethylhydrazine | SS |
| pyrrolidine | VS |
| morpholine | S |
| 2-pyrrolidone | S |

TABLE 1 (continued)

| Amine Liquid | Solubility |
|---|---|
| N-methyl-2-pyrrolidone | I |
| hexamethylphosporamide | S |
| 1,1,3,3-tetramethyl urea | I |
| N-methylpiperidine | I |
| 1-aminopiperidine | SS |
| tetrahydrofurfurylamine | S |
| butylamine | SS |
| propylamine | SS |
| benzylamine | S |
| piperidine | S |
| 2-(ethylamino)ethanol | S |

EXAMPLE 3

A piece of colorless poly co(trichlorofluoro ethylene/tetrafluoroethylene) film (7.6 x 7.6 cm) was dip coated with a 0.8 wt% solution of poly(anilinium tosylate) in pyrrolidine to provide a polyaniline-coated blue film. The coated film was then let stand in air at ambient temperature. The color of the film changed with time from blue through blue-green, to green. These results showed that the polyaniline coating returned to its conductive state (green) from its originally non-conductive state (blue) as the amine solvent gradually evaporated. The surface resistance of the film was evaluated as a function of time using the co-linear four-probe method. The surface resistance of the film indeed changed as the color changed and the greener the coating, the lower the surface resistance of film. The results are summarized in the following Table 2.

TABLE 2

| TIME AFTER COATING | COLOR SURFACE RESISTANCE (ohm/sq) |
|---|---|
| 10 min | blue>$10^{12}$ |
| 5 h | blue-green2x$10^{10}$ |
| 1 day | light-green 6x$10^{9}$ |
| 4 days | green1x$10^{8}$ |
| 10 days | deeper green5x$10^{6}$ |

EXAMPLE 4

Using the dip coating technique of Example 3 other plastic films, such as poly(ethylene terephthalate)(PET)), (poly (co-tetrafluoro ethylene/chlorotrifluoroethylene) (PTFE/CTF), Nylon 6 and polycarbonate (PC) were dip coated with poly(anilinium tosylate) and the surface resistance of the coated film evaluated.

The experiments were conducted by dip coating the plastic films (5 x 5 cm) with a 0.8 wt% solution of poly(anilinium tosylate) in pyrrolidine. The surface resistances were measured 10 days after coating. The results are summarized in the following Table 3.

TABLE 3

| BASE FILM | SURFACE RESISTANCE (ohm/sq) |
|---|---|
| PTFE/CTF | 4.8x$10^{6}$ |
| Nylon-6 | 2x$10^{7}$ |
| PET | 4.6x$10^{5}$ |
| PC | 1x$10^{5}$ |

EXAMPLE 5

A piece of poly (co-tetrafluoroethylene chlorotrifluoroethylene) film (10 x 10 cm) was coated with 1.6wt% solution of poly(anilinium tosylate) in pyrrolidine by a transfer coating technique. In this technique, polyaniline solution was

homogeneously laid down on the plastic film by a metal screen roller which contains hundreds of regularly engraved cells per square inch. The coated blue film was then heat-dried to give a green film. SIMS (secondary Ion Mass Spectroscopy) studies measured the thickness of the polyanilinium tosylate) coating which was 0.48 microns. XPS (X-ray photoelectron spectroscopy) studies conducted 10 days after coating, measured the ratio of nitrogen to sulfur in the green coating to be about 2 to 1, a ratio which was approximately equal to the N/S mole ratio of the original doped polyaniline powder of Example 1.

EXAMPLE 6

A piece of polyethylene terephthalate film (7.5 x 10 cm) was coated with the same solution as in Example 5 by a transfer coating technique. The film was blue. Using the procedure of Example 3, the surface resistance was measured right after coating and was greater than $10^{12}$ ohm/sq. The evaporation of the amine solvent residue was accelerated by a heat treatment. The surface resistance measured after heat treatment was $5x10^7$ ohm/sq. The elimination of the amine solvent residue was forced to completion by soaking the coated film in a 10wt% aqueous solution of p-toluene sulfonic acid for 15 minutes. The surface resistance measured after the soaking treatment was $2x10^5$ohm/sq.

EXAMPLE 7

Calculations were carried out to suggest suitable solvents for use with unsubstituted undoped polyaniline using group additive contributions for determining individual components of the Hildebrand parameter (d). In the representations of Hansen, the following nomenclature is used

A) Nomenclature

(1) d is the Hildebrand Parameter (units: MPa ) and is related to the Hansen Parameters ($d_d$, $d_p$, $d_h$) as follows:

$$d^2=d_t^2=d_d^2+d_p^2+d_s^2$$

(2) $d_d$ is the contribution from dispersion interactions.

(3) $d_p$ is the contribution from polar interactions.

(4) $d_h$ is the contribution from hydrogen bonding interactions.

These components of d can be estimated from tabulated group molar attraction contributions from dispersion interactions ($F_d$), and polar interactions ($F_p$) and from the cohesive hydrogen bonding energy ($U_h$). This analysis led to the estimate for the solubility parameter of the undoped (base) form of polyaniline given below:

$d_d$ = 18.5 MPa
$d_p$ = 4.1 MPa
$d_h$ = 7.4 MPa

$$d = (d_d^2 + d_p^2 + d_h^2) = 20.3 \text{ MPa}$$

An estimate of the Hildebrand Parameter based on group contributions to the heat of vaporization gave d = 23.8 MPa . Solvents which dissolve or swell undoped polyaniline will be those whose own solubility parameters are close to those characteristic of the polymer. Polar solvents with relatively strong hydrogen bonding were suggested.

EXAMPLE 8

A series of potential solvents with significant polar and hydrogen bonding contributions were tested with polyaniline which had been synthesized as in Example 1 and then undoped (neutralized) by treatment with an aqueous solution of sodium carbonate. Solvents which were demonstrated to dissolve undoped polyaniline are shown in Table 4 below and in Figure 1.

TABLE 4

| Observed Solvents For Unsubstituted Undoped Polyaniline | | | | | |
|---|---|---|---|---|---|
| Liquid | BP(°C) | gw | e | m | d |
| Morpholine | 129 | 200.0 | 7.3 | 5.0 | 22.1 |
| Pyridine | 115 | 80.0 | 12.3 | 7.3 | 21.7 |
| Pyrrolidine | 88 | - | - | 5.3 | - |
| N-methylpyrrolidone | 204 | - | 32.0 | - | 23.7 |
| Dimethylformamide | 158 | 68.0 | 37.0 | 11.2 | 24.1 |
| Dimethylhydrazine | 64 | - | - | - | 19.8 |
| Propylamine | 48.5 | - | 5.3 | 4.7 | 19.7 |
| Butylamine | 78 | - | 5.3 | 4.7 | 18.6 |
| Picoline | 129 | - | 9.8 | 6.3 | 20.9 |
| Aniline | 182 | 94.0 | 6.9 | 5.0 | 22.6 |
| Quinoline | 114 | - | 9.0 | 7.6 | 22.0 |
| 2-Pyrrolidone | 245 | - | - | 7.7 | 28.4 |
| Dimethylacetamide | 165 | 87.0 | 38.0 | 12.7 | 22.7 |
| Tetramethylurea | 177 | - | 23.1 | 13.0 | 21.7 |
| Ethylenediamine Hexamethyl | 117 | - | 12.9 | 6.6 | 25.3 |
| Phosphoramide | 235 | - | 30.0 | 17.6 | 23.2 |
| "-" means that the data is not available. | | | | | |

The parameters listed in Table 4 are as follows: "B.P." is the boiling point in °C,"$g_w$" is the relative sound velocity in the paper method by the solvent (water = 100) which is a measure of hydrogen bonding capability), "e" is the dielectric constant relative to the permittivity of free space ($e_0$ = 8.854 x $10^{-12}$ F/m),"m" is the dipole moment in $10^{-30}$ Cm, and "d" is the Hildebrand (solubility) parameter in MPa . The data were used to establish an empirical measure of the solubility parameters which characterize the interactions of undoped polyaniline according to a method developed by Hansen. Values of the Hansen parameters for the solvents used were taken from "Handbook of Solubility Parameters and other Cohesive Parameters" by A.F.M. Barton (CRC Press, 1983). When multiple literature source were found with widely differing values, those sets of values were taken which were the closest to those theoretically predicted for the given solvent.

B) <u>Hansen's Method for Solubility Parameter:</u>

(1) In this method, the polymer is characterized as having a "solubility sphere" in a three dimensional space defined by the coordinates $d_d$, $d_p$, $d_h$. The center point of the solubility sphere is ($2d'_d$,$d'_p$,$d'_h$) and the radius of the sphere is R.

(2) An interaction distance for a given solvent is defined as:

$$r=[4(d_d-d'_d)^2 + (d_p-d'_p)^2 + (d_h-d'_h)^2]$$

(3) The polymer should be soluble in a given solvent when r<R.

C) <u>Hansen Method with Polyaniline and Various Solvents</u>

(1) The following values of the Hansen Parameters (all in units of $MP_a$ ) were determined for polyaniline by sampling Hansen Space (i.e., the range of possible values for $d_d$, $d_p$ and $d_h$) with the series of solvents in Table 5.

(i) $d'_d$=17.4
(ii) $d_{'p}$=8.5
(iii) $d_{'h}$=10.4
(iv) R=6
(v) d=22.0

The following Table 5 sets forth the Hansen Parameters of various liquids which have been shown to be solvents for unsubstituted and undoped polyaniline base.

Table 5

| Hansen Parameters of Solvents For Unsubstituted Undoped Polyaniline Base | | | | |
|---|---|---|---|---|
| Liquid | $d_d$ | $d_p$ | $d_h$ | r |
| Morpholine | 16.0 | 11.4 | 10.1 | 4.0 |
| Pyridine | 17.6 | 10.1 | 7.7 | 3.2 |
| N-methylpyrrolidone | 16.5 | 10.4 | 13.5 | 4.4 |
| Dimethylformamide | 17.4 | 13.7 | 11.3 | 5.3 |
| Dimethylhydrazine | 15.3 | 5.9 | 11.0 | 5.0 |
| Propylamine | 13.9 | 9.3 | 7.2 | 4.1 |
| Butylamine | 13.6 | 8.1 | 8.0 | 4.9 |
| Picoline | 18.2 | 7.8 | 6.8 | 4.0 |
| Aniline | 19.4 | 5.1 | 10.0 | 5.3 |
| Quinoline | 19.4 | 7.0 | 7.6 | 5.1 |
| 2-Pyrrolidone | 19.4 | 17.4 | 11.3 | 99.8 |
| Dimethylacetamide | 16.8 | 11.5 | 10.2 | 3.2 |
| Tetramethylurea | 16.8 | 8.2 | 11.1 | 1.4 |
| Ethylene Diamine Hexamethyl | 16.6 | 8.8 | 17.0 | 6.8 |
| phosphoramide | 18.3 | 8.6 | 11.3 | 2.0 |

The average values of the Parameters, $d_d$, $d_p$ and $d_h$, in Table 5 determine the approximate center of the solubility sphere ($2d'_d$, $d'_p$, $d'_h$) and the span of r values determine the approximate radius, R.
(2) Examples:
(i) N-methyl Pyrrolidone (NMP):
$d_d$=16.5, $d_p$=10.4, $d_h$=13.5

$$r=[4(16.5-17.4)^2 + (10.4-8.5)^2 + (13.5-10.4)^2] = 4.1$$

Since r < R, N-methylpyrrolidone is predicted and found to be a solvent.

EXAMPLE 9

A number of prospective solvents were examined and found to be non-solvents for undoped polyaniline and for poly(anilinium tosylate). These non-solvents are summarized in the following Table 6 along with the predicted interaction distance (r) of the Hansen Method.

TABLE 6

| Non-Solvents of Polyaniline Tosylate and Polyaniline Base Non-Solvent | | | | |
|---|---|---|---|---|
| Non-Solvent | $g_w$ | $m_p$ | d | $d_d$ |
| Dipropylamine | - | - | 16.3 | 14.0 |
| Triethylamine | - | 2.2 | 15.3 | 14.6 |
| Tributylamine | - | 2.3 | 15.9 | 15.1 |
| Diisopropylamine | - | - | 15.2 | 13.8 |
| N-Ethylaniline | - | - | 21.5 | 17.1 |
| 4-Butylaniline | - | - | 20.4 | 16.9 |
| Dipropylamine | 6.2 | 5.8 | 8.5 | |
| Triethylamine | 3.7 | 1.9 | 11.3 | |
| Tributylamine | 2.8 | 4.0 | 9.7 | |
| Diisopropylamine | 6.2 | 2.0 | 11.3 | |

TABLE 6 (continued)

| Non-Solvents of Polyaniline Tosylate and Polyaniline Base Non-Solvent | | | | |
|---|---|---|---|---|
| Non-Solvent | $g_w$ | $m_p$ | d | $d_d$ |
| N-Ethylaniline | 10.5 | 7.7 | 3.4 | |
| 4-Butylaniline | 9.1 | 6.6 | 4.0 | |
| "-" denotes tht the data is not available. | | | | |

The Hansen Parameters of these Lewis base non-solvents are graphically compared to those for the Lewis base solvents of Example 8 in Figure 2. The majority of non-solvents in Table 6 have, as expected r<R (R 6 from Example 8); however, there are also a few exceptions. Such exceptions are frequently seen and can stem from inaccurately known Hansen Parameters. Reference to Table 4 reveals that Lewis base solvents of polyaniline possess a hydrogen bonding parameter, $g_w$, in cases where it is known, that is greater than 68.

EXAMPLE 10

Doped polyaniline powder was prepared as in Example 1 and dissolved as in Example 2. The following Table 7 indicates the correlations found for solvents of polyaniline tosylate between the physical parameters: Boiling Point (B. P.), Hydrogen Bonding ($g_w$), Dielectric Constant (e), Dipole Moment (m) Hildebrand Parameter (d) and $pK_a$.

TABLE 7

| Single Solvents for Polyaniline Tosylate | | | | | | |
|---|---|---|---|---|---|---|
| Solvent | B.P. | $g_w$ | e | $m_p$ | d | $pK_a$ |
| Morpholine | 129 | 200.0 | 7.3 | 5.0 | 22.1 | 8.3 |
| Pyrrolidine | 88 | - | - | 5.3 | - | 11.3 |
| Piperidine | 106 | 89.0 | 5.8 | 4.0 | 19.3 | 11.1 |
| Propylamine | 48.5 | - | 5.3 | 4.7 | 18.2 | 10.8 |
| Butylamine | 78 | - | 5.3 | 4.7 | 17.7 | 10.8 |
| 2-Pyrrolidone | 245 | - | - | 7.7 | 28.4 | - |
| Ethylenediamine | 117 | - | 12.9 | 6.6 | 25.3 | 10.1 |
| Hexamethylphosphoramide | 235 | - | 30.0 | 17.6 | 23.2 | - |
| Benzylamine | 185 | - | - | - | - | 9.3 |
| 2-(methylamino)pyridine | 201 | - | - | - | - | - |
| 2-Picoline | 129 | - | 9.8 | 6.3 | 20.9 | - |
| 4-Picoline | 145 | - | - | 8.6 | - | 6.0 |
| Imidazole | 256 | - | - | - | - | 7.1 |
| 1,1-Dimethylhydrazine | 64 | - | - | - | 19.8 | - |
| Tetrahydrofurfurylamine | 154 | - | - | - | - | - |
| Tetrahydroisoquiniline | 233 | - | - | - | - | - |
| 1-Aminopiperidine | 150 | - | - | - | - | - |
| 2-(Ethylamino)ethanol | 170 | - | - | - | - | - |
| "-" indicates that the data is not available. | | | | | | |

These solvents were moderately polar with dipole moment, $m_p$, equal to or greater than $4.0 \times 10^{-30}$ Cm and were all characterized by relatively high basicity ($pK_a > 6$).

**Claims**

**1.** A non-electrically conductive solution or plasticized composition comprising:

(a) one or more substituted or unsubstituted polyanilines;
(b) one or more Lewis base/dopant complexes comprising a liquid Lewis base other than piperidine which has a $pK_a$ greater than that of said polyanilines; and which is a solvent for said complexes and said polyaniline,

and said dopant capable of doping said polyaniline to form electrically conductive polyaniline on release of said dopant from said complex; and
(c) said liquid Lewis base.

**2.** A solution according to claim 1 wherein polyaniline is a homopolymer or copolymer doped with one or more dopant solvents comprising a substituted or unsubstituted polyaniline of the type derived from polymerizing an aniline of the formula:

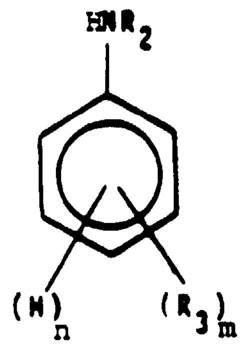

n is an integer from 0 to 5;
m is an integer from 0 to 5, with the proviso that the sum of n and m is 5;
$R_2$ is the same or different at each occurrence and is $R_3$ substituents or hydrogen; and
$R_3$ is deuterium, nitro, phosphinic acid, cyano, amino, phosphonic acid, sulfonic acid, boric acid, phosphoric acid, sulfonate, borate, phosphonate, phosphinate, phosphate, sulfinic acid, sulfinate, hydroxyamino, carboxylic acid, halogen, carboxylate, cyano, or substituted or unsubstituted alkyl, alkenyl, alkoxy, cycloalkyl, hydroxy, cycloalkenyl, alkanoyl, alkylthio, aryloxy, alkylsilane, alkylamino, dialkylamino, arylamino, diarylamino, alkylarylamino, alkylthioalkyl, alkylaryl, arylalkyl, aryloxy, alkylsulfinyl, alkoxyalkyl, alkylsulfonyl, aryl, arylthio, arylsulfinyl, or alkoxycarbonyl, or any two $R_3$ substituents or any one $R_3$ substituent and any one $R_2$ substituent taken together may form a substituted or unsubstituted alkylene, alkenylene or alkynylene chain completing a 3, 4, 5, 6, 7, 8, 9 or 10 membered aromatic, heteroalicyclic, heteroaromatic or alicyclic carbon ring, which ring may optionally include one or more divalent ester, carbonyl, nitrogen, sulfur, sulfinyl, sulfonyl or oxygen, wherein permissible substituents are one or more phosphonic acid, sulfonic acid, boric acid, sulfinic acid, sulfinate, phosphoric acid, quaternary ammonium, sulfonate, borate, carboxylate, phosphonate, amino, alkylamino, alkoxy, dialkylamino, arylamino, diarylamino, alkylarylamino, phosphate, amido, carboxylic acid, halogen, nitro, hydroxy, cyano or epoxy moieties or $R_3$ is an aliphatic moiety having repeat units of the formulas:

$$(OCH_2CH_2)_q\ O\text{-}CH_3,\ (OCH_2CH(CH_3))_qO\text{-}CH_3,\ (CH_2)_q\ CF_3,\ (CF_2)_q\ CF_3 \text{ or } (CH_2)_q\ CH_3$$

wherein q is a positive whole number.

**3.** A solution according to claim 2 wherein said homopolymer or copolymer is of the formulas II to V:

II

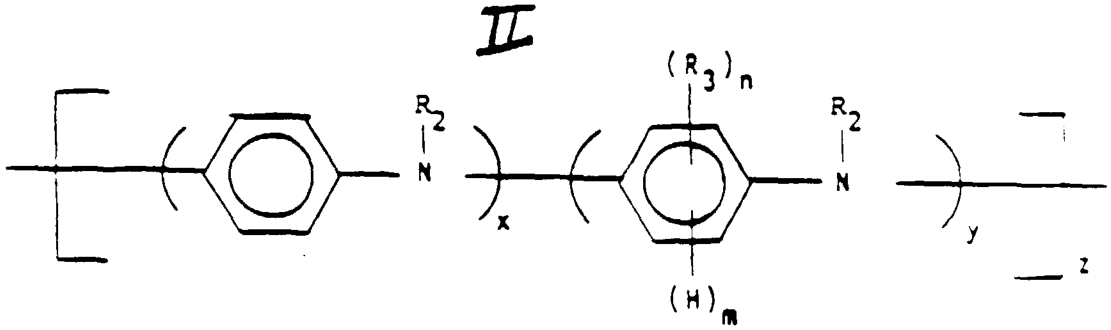

III

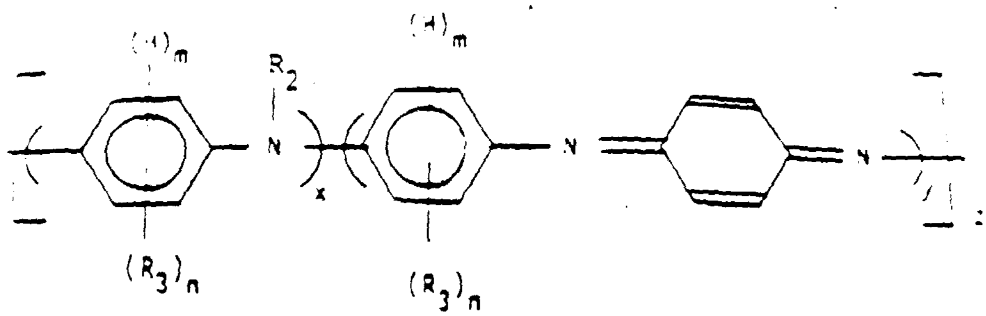

IV

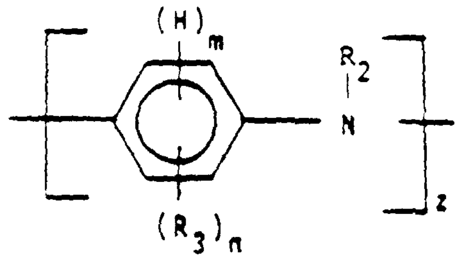

V

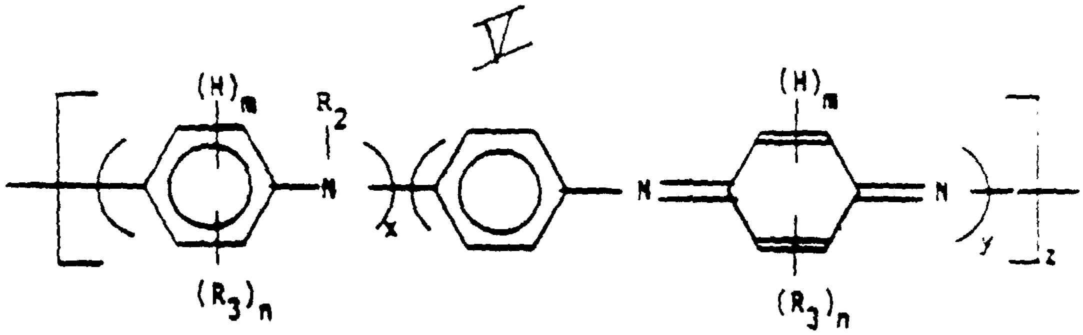

wherein:

x is an integer equal to or greater than 1;
y is equal to or greater than 1, with the proviso that the ratio of x to y is greater than 0.5;
z is equal to or greater than about 1;
n is an integer from 0 to 4;
m is an integer from 0 to 4 with the proviso that the sum of n and m is 4;
$R_2$ is the same or different at each occurrence and is $R_3$ substituents or hydrogen;
$R_3$ is the same or different at each occurrence and is alkyl, alkenyl, alkoxy, cycloalkyl, cycloalkenyl, amino alkanoyl, alkylthio, aryloxy, alkylthioalkyl, alkylaryl, arylalkyl, alkylsulfinyl, alkoxyalkyl, alkylsulfonyl, aryl, arylthio, arylsulfinyl, alkoxycarbonyl, phosphinic acid, phosphonic acid, alkylsilyl, boric acid, arylsulfonyl, carboxylic acid, halogen, hydroxy, phosphate, sulfonate, phosphonate, borate, phosphinate, carboxylate, nitro, cyano, sulfonic acid, phosphoric acid or alkyl or alkoxy substituted with one or more sulfonic acid, carboxylic acid, sulfinate, phosphoric acid, boric acid, sulfinic acid, halogen, sulfate, nitro, cyano, epoxy, amino, hydroxy, quaternary ammonium, sulfonate, phosphate, phosphonate, phosphinic acid, phosphinate, carboxylate, phosphonic acid or borate moieties; or any two $R_3$ groups or any one $R_3$ group and any $R_2$ or $R_4$ group together

may form a substituted or unsubstituted alkylene or alkenylene chain completing a 3, 4, 5, 6, 7, 8, 9 or 10 membered aromatic heteroalicyclic, heteroaromatic or alicyclic carbon ring, which chain may optionally include one or more divalent nitrogen, ester, carbonyl, sulfur, sulfinyl, sulfonyl or oxygen, wherein permissible substitutents are one or more sulfonic acid, carboxylic acid, sulfinate, phosphoric acid, boric acid, sulfinic acid, halogen, sulfate, nitro, cyano, epoxy, amino, hydroxy, quaternary ammonium, sulfonate, phosphate, phosphonate, phosphinic acid, phosphinate, carboxylate, phosphonic acid or borate moieties.

**4.** A solution according to claim 2 wherein:

$R_2$ is hydrogen;
$R_3$ is alkyl or alkoxy;
m is 3 or 4; and
n is 0 or 1.

**5.** A solution according to claim 4 wherein n is 0 and m is 4.

**6.** A solution according to claim 5 wherein said Lewis base has a $pK_a$ of equal to or greater than about 5.4 and is a liquid having a boiling point equal to or less than about 150°C at 760mm of Hg.

**7.** A solution according to claim 6 wherein said Lewis base is selected from the group consisting of primary, secondary, and tertiary aromatic or aliphatic amines, phosphines or amides.

**8.** A solution according to claim 7 wherein said Lewis base is 2-pyrrolidone, 2-oxazolidone, and 2-imidazolidone.

**9.** A solution according to claim 7 wherein said dopant is a compound of the formula:

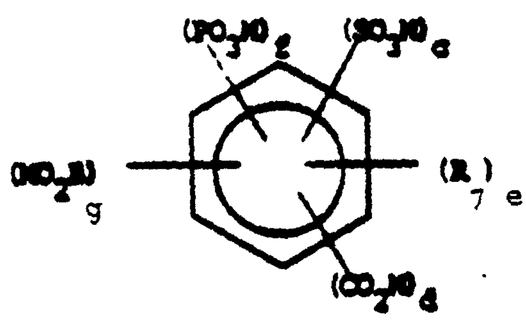

wherein:

M is a metal cation or non-metal cation with the proviso that at least one of M is a proton;
c is 1, 2, 3 or 4;
e is 0, 1 or 2;
f is 0, 1 or 2;
g is 0, 1 or 2;
d is 0, 1 or 2; and
$R_7$ is hydroxy, alkyl, halogen, cyano, phosphonic acid, phosphonate, phosphinic acid, phosphinate, alkoxy, hydroxy, sulfinic acid, sulfinate, or substituted or unsubstituted aryl or alkyl having from 1 to about 30 carbon atoms wherein permissible substitutents are perhaloalkyl, halogen, cyano, phosphonate, borate, phosphonic acid, sulfonate, carboxylate, phosphate, haloalkyl, sulfonic acid, sulfinic acid, sulfinate, phosphoric acid boric acid, carboxylic acid, or any two R7. substituents together may form an alkenylene chain completing a fused aromatic ring system, which chain may be unsubstituted or substituted with one or more halogen, hydroxy, phosphonate, borate, phosphonic acid, sulfonate, phosphate nitro, boric acid, phosphoric acid, carboxylate, cyano, sulfonic acid or carboxylic acid groups, or $R_7$ is a moiety of the formula:

$$-(OCH_2CH_2)_qOCH_3 \text{ or } -(OCH_2CH(CH_3))_qOCH_3$$

wherein q is 1 to about 10.

**10.** A solution according to claim 9 wherein:

M is a cation, with the proviso that at least oneof M is a proton.
c is 1, 2 or 3;
d, g and f are 0;
e is 0, 1 or 2; and
$R_7$ is alkyl, fluoro or alkyl substituted with one or more fluoro substitutents or any two $R_7$ grqup together may form a substituted or unsubstituted divalent alkenylene chain completing a naphthalene, anthracene or phenanthracene ring structure, wherein permissible substitutents are one or more sulfonic acid, fluoro or alkyl substituted with one or more sulfonic acid or fluoro groups.

**Patentansprüche**

**1.** Nicht elektrisch leitfähige Lösung oder plastifizierte Zusammensetzung, umfassend:

(a) ein oder mehrere substituierte oder unsubstituierte Polyaniline;
(b) einen oder mehrere Lewis-Base/Dotierungsmittel-Komplexe, umfassend eine von Piperidin verschiedene flüssige Lewis-Base mit einem größeren $pK_a$ als derjenige der Polyaniline; und welche ein Lösungsmittel für die Komplexe und das Polyanilin ist, und wobei das Dotierungsmittel in der Lage ist, das Polyanilin zu dotieren, um ein elektrisch leitfähiges Polyanilin bei der Freisetzung des Dotierungsmittels von dem Komplex zu bilden; und
(c) die flüssige Lewis-Base.

**2.** Lösung nach Anspruch 1, wobei das Polyanilin ein Homopolymer oder Copolymer ist, dotiert mit einem oder mehreren Dotierungs-Lösungsmitteln, umfassend ein substituiertes oder unsubstituiertes Polyanilin des Typs, abgeleitet aus der Polymerisierung eines Anilins der Formel:

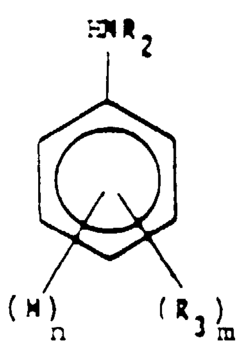

n ist eine ganze Zahl von 0 bis 5:
m ist eine ganze Zahl von 0 bis 5, mit der Maßgabe, daß die Summe von n und m 5 ist;
$R_2$, das bei jedem Vorkommen gleich oder verschieden ist, bedeutet $R_3$-Substituenten oder Wasserstoff; und
$R_3$ ist Deuterium, Nitro, Phosphinsäure, Cyano, Amino, Phosphonsäure, Sulfonsäure, Borsäure, Phosphorsäure, Sulfonat, Borat, Phosphonat, Phosphinat, Phosphat, Sulfinsäure, Sulfinat, Hydroxyamino, Carbonsäure, Halogen, Carboxylat, Cyano, oder substituiertes oder unsubstituiertes Alkyl, Alkenyl, Alkoxy, Cycloalkyl, Hydroxy, Cycloalkenyl, Alkanoyl, Alkylthio, Aryloxy, Alkylsilan, Alkylamino, Dialkylamino, Arylamino, Diarylamino, Alkylarylamino, Alkylthioalkyl, Alkylaryl, Arylalkyl, Aryloxy, Alkylsulfinyl, Alkoxyalkyl, Alkylsulfonyl, Aryl, Arylthio, Arylsulfinyl, oder Alkoxycarbonyl, oder beliebige zwei $R_3$-Substituenten oder irgendein $R_3$-Substituent und irgendein $R_2$-Substituent können zusammengenommen eine substituierte oder unsubstituierte Alkylen-, Alkenylen- oder Alkinylenkette bilden, welche einen 3-, 4-, 5-, 6-, 7-, 8-, 9- oder 10-gliedrigen, aromatischen, heteroalicyclischen, heteroaromatischen oder alicyclischen Kohlenstoffring vervollständigt, welcher Ring

wahlweise eines oder mehrere aus zweiwertiger Ester, Carbonyl, Stickstoff, Schwefel, Sulfinyl, Sulfonyl oder Sauerstoff beinhalten kann, wobei zulässige Substituenten eine oder mehrere Phosphonsäure-, Sulfonsäure-, Borsäure-, Sulfinsäure-, Sulfinat-, Phosphorsäure-, quaternäre Ammonium-, Sulfonat-, Borat-, Carboxylat-, Phosphonat-, Amino-, Alkylamino-, Alkoxy-, Dialkylamino-, Arylamino-, Diarylamino-, Alkylarylamino-, Phosphat-, Amido-, Carbonsäure-, Halogen-, Nitro-, Hydroxy-, Cyano- oder Epoxygruppen sind, oder $R_3$ ist eine aliphatische Gruppe mit wiederkehrenden Einheiten der Formeln:

$$(OCH_2CH_2)_q\ O\text{-}CH_3,\ (OCH_2CH(CH_3))_qO\text{-}CH_3,\ (CH_2)_q\ CF_3,\ (CF_2)_q\ CF_3 \text{ oder } (CH_2)_q\ CH_3$$

worin q eine positive ganze Zahl ist.

3. Lösung nach Anspruch 2, wobei das Homopolymer oder Copolymer den Formeln II bis V entspricht:

II

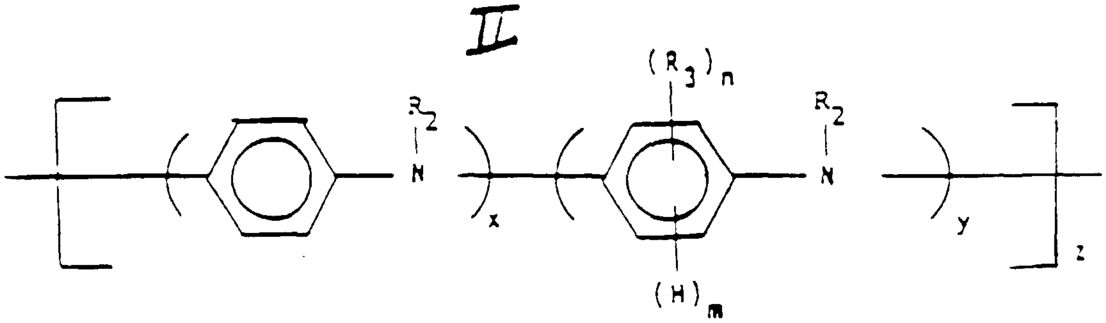

III

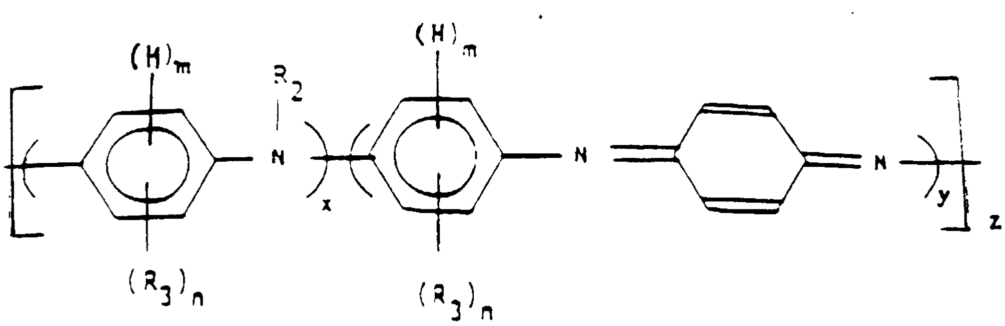

IV

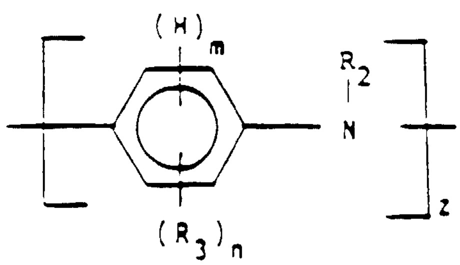

V

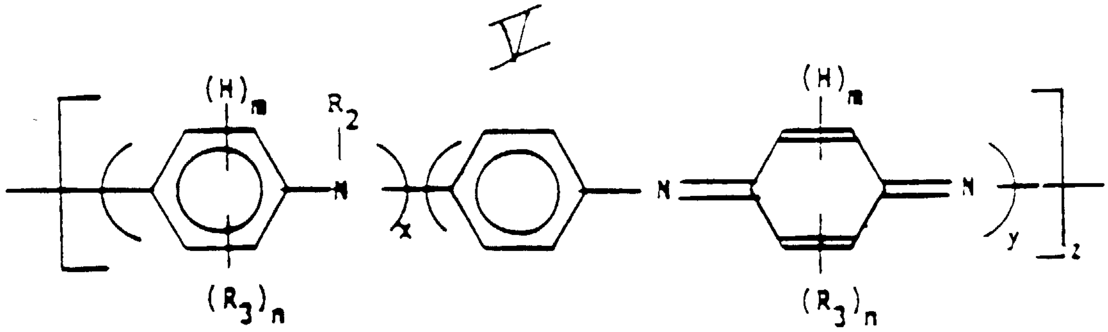

worin bedeuten:

x eine ganze Zahl von gleich oder größer als 1;
y gleich oder größer als 1, mit der Maßgabe, daß das Verhältnis von x zu y größer als 0,5 ist;
z gleich oder größer als etwa 1;
n eine ganze Zahl von 0 bis 4;
m eine ganze Zahl von 0 bis 4, mit der Maßgabe, daß die Summe aus n und m 4 ist;
$R_2$, das bei jedem Vorkommen gleich oder verschieden ist, $R_3$-Substituenten oder Wasserstoff;
$R_3$, das bei jedem Vorkommen gleich oder verschieden ist, Alkyl, Alkenyl, Alkoxy, Cycloalkyl, Cycloalkenyl, Aminoalkanoyl, Alkylthio, Aryloxy, Alkylthioalkyl, Alkylaryl, Arylalkyl. Alkylsulfinyl, Alkoxyalkyl, Alkylsulfonyl, Aryl, Arylthio, Arylsulfinyl, Alkoxycarbonyl, Phosphinsäure, Phosphonsäure, Alkylsilyl, Borsäure, Arylsulfonyl, Carbonsäure, Halogen, Hydroxy, Phosphat, Sulfonat, Phosphonat, Borat, Phosphinat. Carboxylat, Nitro, Cyano, Sulfonsäure, Phosphorsäure oder Alkyl oder Alkoxy, substituiert mit einer oder mehreren Sulfonsäure-, Carbonsäure-, Sulfinat-, Phosphorsäure-, Borsäure-, Sulfinsäure-. Halogen-, Sulfat-, Nitro-, Cyano-, Epoxy-, Amino-. Hydroxy-, quaternäre Ammonium-, Sulfonat-, Phosphat-, Phosphonat-, Phosphinsäure-, Phosphinat-, Carboxylat-, Phosphonsäure- oder Boratgruppen; oder beliebige zwei $R_3$-Gruppen oder irgendeine $R_3$-Gruppe und irgendeine $R_2$- oder $R_4$-Gruppe können zusammengenommen eine substituierte oder unsubstituierte Alkylen- oder Alkenylenkette bilden, die einen 3-, 4-, 5-, 6-. 7-, 8-, 9- oder 10-gliedrigen, aromatischen, heteroalicyclischen, heteroaromatischen oder alicyclischen Kohlenstoffring vervollständigt, welche Kette wahlweise eines oder mehrere beinhalten kann aus zweiwertiger Stickstoff, Ester, Carbonyl, Schwefel, Sulfinyl, Sulfonyl oder Sauerstoff, wobei zulässige Substituenten eine oder mehrere sind aus Sulfonsäure-, Carbonsäure-, Sulfinat-, Phosphorsäure-, Borsäure-, Sulfinsäure-, Halogen-, Sulfat-, Nitro-, Cyano-, Epoxy-, Amino-, Hydroxy-, quaternäre Ammonium-, Sulfonat-, Phosphat-, Phosphonat-, Phosphinsäure-, Phosphinat-, Carboxylat-, Phosphonsäure- oder Boratgruppen.

**4.** Lösung nach Anspruch 2, wobei bedeuten:

$R_2$ Wasserstoff;
$R_3$ Alkyl oder Alkoxy;
m 3 oder 4; und
n 0 oder 1.

**5.** Lösung nach Anspruch 4, wobei n 0 ist und m 4 ist.

**6.** Lösung nach Anspruch 5, wobei die Lewis-Base einen $pK_a$ von gleich oder größer als etwa 5,4 aufweist und eine Flüssigkeit mit einem Siedepunkt von gleich oder weniger als etwa 150°C bei 760 mm Hg ist.

**7.** Lösung nach Anspruch 6, wobei die Lewis-Base aus der Gruppe gewählt ist, bestehend aus primären, sekundären und tertiären aromatischen oder aliphatischen Aminen, Phosphinen oder Amiden.

**8.** Lösung nach Anspruch 7, wobei die Lewis-Base 2-Pyrrolidon, 2-Oxazolidon und 2-Imidazolidon ist.

**9.** Lösung nach Anspruch 7, wobei das Dotierungsmittel eine Verbindung der Formel ist:

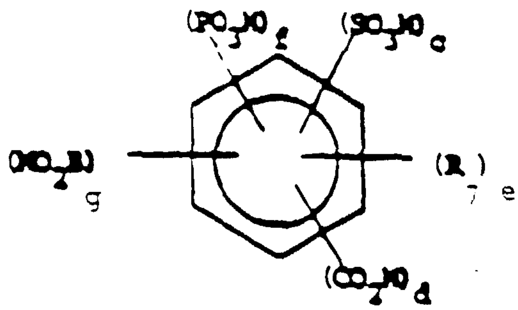

worin bedeuten:

M ein Metallkation oder Nichtmetallkation mit der Maßgabe, daß mindestens eines von M ein Proton ist;
c 1, 2, 3 oder 4;
e 0, 1 oder 2;
f 0, 1 oder 2;
g 0, 1 oder 2;
d 0, 1 oder 2; und
$R_7$ Hydroxy, Alkyl, Halogen, Cyano, Phosphonsäure, Phosphonat, Phosphinsäure, Phosphinat, Alkoxy, Hydroxy, Sulfinsäure, Sulfinat oder substituiertes oder unsubstituiertes Aryl oder Alkyl mit 1 bis etwa 30 Kohlenstoffatomen, wobei zulässige Substituenten Perhalogenalkyl, Halogen, Cyano, Phosphonat, Borat, Phosphonsäure, Sulfonat, Carboxylat, Phosphat, Halogenalkyl, Sulfonsäure, Sulfinsäure. Sulfinat, Phosphorsäure, Borsäure, Carbonsäure sind, oder beliebige zwei $R_7$-Substituenten können zusammengenommen eine Alkylenkette bilden, welche ein kondensiertes aromatisches Ringsystem vervollständigt, welche Kette unsubstituiert oder substituiert sein kann mit einer oder mehreren Halogen-, Hydroxy-, Phosphonat-, Borat-, Phosphonsäure-, Sulfonat-, Phosphat-, Nitro-, Borsäure-, Phosphorsäure-, Carboxylat-, Cyano-, Sulfonsäure- oder Carbonsäuregruppen oder $R_7$ ist eine Gruppe der Formel:

$$-(OCH_2CH_2)_qOCH_3 \text{ oder } -(OCH_2CH(CH_3))_qOCH_3$$

worin q 1 bis etwa 10 ist.

**10.** Lösung nach Anspruch 9, worin bedeuten:

M ein Kation, mit der Maßgabe, daß mindestens eines von M ein Proton ist;
c 1, 2 oder 3;
d, g und f 0;
e 0, 1 oder 2; und
$R_7$ Alkyl, Fluor oder Alkyl, substituiert mit einem oder mehreren Fluorsubstituenten, oder beliebige zwei $R_7$-Gruppen können zusammengenommen eine substituierte oder unsubstituierte, zweiwertige Alkenylenkette bilden, die eine Naphthalin-, Anthracen- oder Phenanthracen-Ringstruktur vervollständigt, wobei zulässige Substituenten eine oder mehrere Sulfonsäure-, Fluor- oder Alkylgruppen, substituiert mit einem oder mehreren Sulfonsäure- oder Fluorgruppen, sind.

## Revendications

**1.** Solution ou composition plastifiée qui n'est pas électroconductrice, comprenant :

(a) une ou plusieurs polyanilines substituées ou non ;
(b) un ou plusieurs complexes base de Lewis/dopant comprenant une base de Lewis liquide autre que la pipéridine, qui présente un pKa supérieur à celui desdites polyanilines, et qui est un solvant pour lesdits complexes et ladite polyaniline, et ledit dopant étant capable de doper ladite polyaniline pour former une polyaniline électroconductrice lors de la libération dudit dopant à partir dudit complexe ; et

(c) ladite base de Lewis liquide.

**2.** Solution selon la revendication 1, dans laquelle la polyaniline est un homopolymère ou un copolymère dopé avec un ou plusieurs solvants dopants, comprenant une polyaniline substituée ou non, du type dérivé de la polymérisation d'une aniline répondant à la formule :

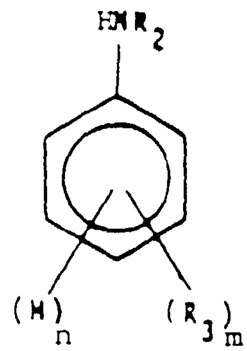

n *représente* un nombre entier de 0 à 5 ;
m représente un nombre entier de 0 à 5 à condition que la somme de n et de m soit égale à 5 ;
$R_2$ est identique ou différent à chaque occurrence et représente les substituants $R_3$ ou un atome d'hydrogène ;
$R_3$ représente un atome de deutérium, un groupe nitro, acide phosphinique, cyano, amino, acide phosphonique, acide sulfonique, acide borique, acide phosphorique, sulfonate, borate, phosphonate, phosphinate, phosphate, acide sulfinique, sulfinate, hydroxyamino, acide carboxylique, halogéno, carboxylate, cyano ou un groupe alkyle substitué ou non, alcényle, alcoxy, cycloalkyle, hydroxy, cycloalcényle, alcanoyle, alkylthio, aryloxy, alkylsilane, alkylamino, dialkylamino, arylamino, diarylamino, alkylarylamino, alkylthioalkyle, alkylaryle, arylalkyle, aryloxy, alkylsulfinyle, alcoxyalkyle, alkylsulfonyle, aryle, arylthio, arylsulfinyle ou alcoxycarbonyle, ou n'importe quels substituants $R_3$ au nombre de deux, ou n'importe quel substituant $R_3$ et n'importe quel substituant $R_2$ pris ensemble peuvent former une chaîne alkylène, alcénylène ou alcynylène, substituée ou non, complétant un cycle carboné aromatique, hétéroalicyclique, hétéroaromatique ou alicyclique à 3, 4, 5, 6, 7, 8, 9 ou 10 éléments, lequel cycle peut éventuellement comprendre un ou plusieurs groupes ester, carbonyle, sulfinyle, sulfonyle, atomes d'azote, de soufre fre ou d'oxygène divalents, dans laquelle les substituants acceptables sont un ou plusieurs fragments acide phosphonique, acide sulfonique, acide borique, acide sulfinique, sulfinate, acide phosphorique, ammonium quaternaire, sulfonate, borate, carboxylate, phosphonate, amino, alkylamino, alcoxy, dialkylamino, arylamino, diarylamino, alkylarylamino, phosphate, amido, acide carboxylique, halogéno, nitro, hydroxy, cyano ou époxy. ou $R_3$ représente un fragment aliphatique présentant des motifs répétitifs de formules :

$$(OCH_2CH_2)_qO\text{-}CH_3,\ (OCH_2CH(CH_3))_qO\text{-}CH_3,\ (CH_2)_qCF_3,\ (CF_2)_qCF_3 \text{ ou } (CH_2)_qCH_3$$

dans lesquelles q représente un nombre entier positif.

**3.** Solution selon la revendication 2, dans laquelle ledit homopolymère ou copolymère répond aux formules II à V :

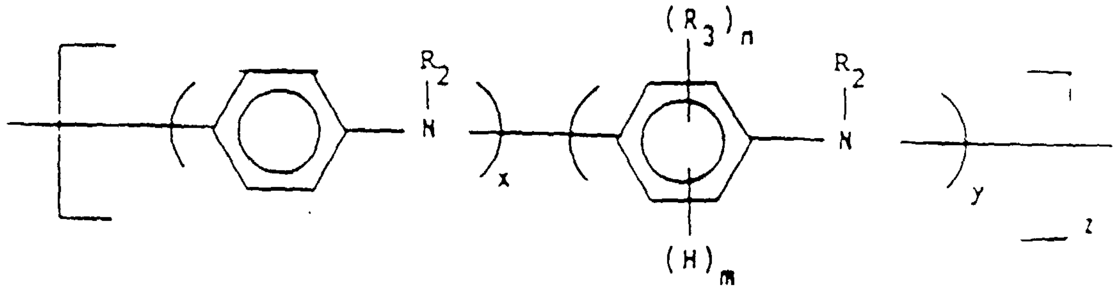

II

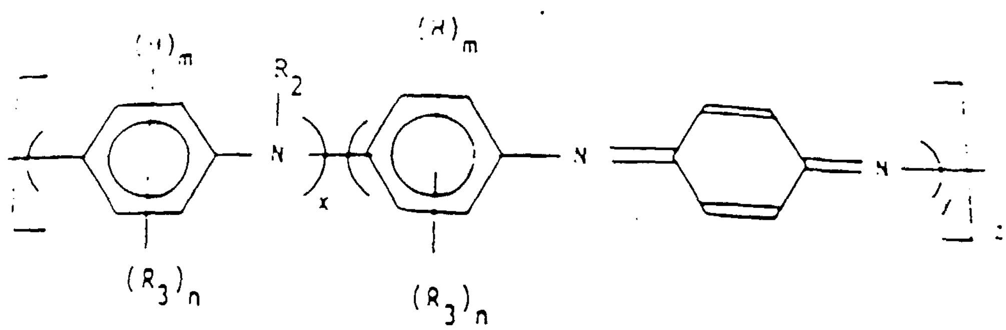

III

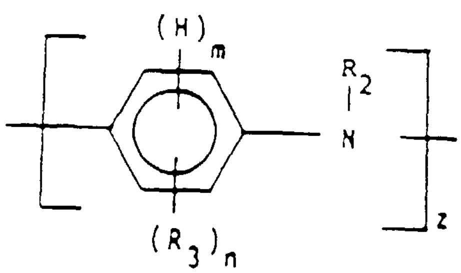

IV

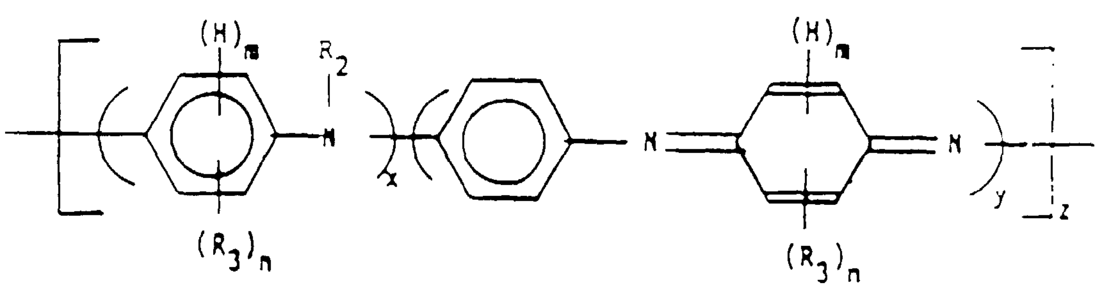

V

dans lesquelles :

x représente un nombre entier supérieur ou égal à 1 ;
y est supérieur ou égal à 1 à condition que le rapport de x *à* y soit supérieur à environ 0,5 ;

z est supérieur ou égal à environ 1 ;
n représente un nombre entier de 0 à 4 ;
m représente un nombre entier de 0 à 4 à condition que la somme de n et de m soit égale à 4 ;
$R_2$ est identique ou différent à chaque occurrence et représente les substituants $R_3$ ou un atome d'hydrogène ;
$R_3$ est identique ou différent à chaque occurrence et représente un groupe alkyle, alcényle, alcoxy, cycloalkyle, cycloalcényle, amino, alcanoyle, alkylthio, aryloxy, alkylthioalkyle, alkylaryle, arylalkyle, alkylsulfinyle, alcoxyalkyle, alkylsulfonyle, aryle, arylthio, arylsulfinyle, alcoxycarbonyle, acide phosphinique, acide phosphonique, alkylsilyle, acide borique, arylsulfonyle, acide carboxylique, halogéno, hydroxy, phosphate, sulfonate, phosphonate, borate, phosphinate, carboxylate, nitro, cyano, acide sulfonique, acide phosphorique ou alkyle ou alcoxy, substitué par un ou plusieurs fragments acide sulfonique, acide carboxylique, sulfinate, acide phosphorique, acide borique, acide sulfinique, halogéno, sulfate, nitro, cyano, époxy, amino, hydroxy, ammonium quaternaire, sulfonate, phosphate, phosphonate, acide phosphinique, phosphinate, carboxylate, acide phosphonique ou borate ; ou n'importe quels groupes $R_3$ au nombre de deux, ou n'importe quel groupe $R_3$ et n'importe quel groupe $R_2$ ou $R_4$ pris ensemble peuvent former une chaîne alkylène ou alcénylène, substituée ou non, complétant un cycle carboné aromatique, hétéroalicyclique, hétéroaromatique ou alicyclique à 3, 4, 5, 6, 7, 8, 9 ou 10 éléments, laquelle chaîne peut éventuellement comprendre un ou plusieurs groupes ester, carbonyle, sulfinyle, sulfonyle, atomes d'azote, de soufre ou d'oxygène divalents, dans laquelle les substituants acceptables sont un ou plusieurs fragments acide sulfonique, acide carboxylique, sulfinate, acide phosphorique, acide borique, acide sulfinique, halogéno, sulfate, nitro, cyano, époxy, amino, hydroxy, ammonium quaternaire, sulfonate, phosphate, phosphonate, acide phosphinique, phosphinate, carboxylate, acide phosphonique ou borate.

**4.** Solution selon la revendication 2, dans laquelle :

$R_2$ représente un atome d'hydrogène,
$R_3$ représente un groupe alkyle ou alcoxy,
m vaut 3 ou 4 ; et
n vaut 0 ou 1.

**5.** Solution selon la revendication 4, dans laquelle n vaut 0 et m vaut 4.

**6.** Solution selon la revendication 5, dans laquelle ladite base de Lewis présente un pKa supérieur ou égal à environ 5,4 et est un liquide présentant un point d'ébullition inférieur ou égal à environ 150 °C, sous 760 mm Hg ($10^5$ Pa).

**7.** Solution selon la revendication 6, dans laquelle ladite base de Lewis est choisie dans l'ensemble constitué par les amides, phosphines ou amines aromatiques ou aliphatiques, primaires, secondaires et tertiaires.

**8.** Solution selon la revendication 7, dans laquelle ladite base de Lewis est la 2-pyrrolidone, la 2-oxazolidone et la 2-imidazole.

**9.** Solution selon la revendication 7, dans laquelle ledit dopant est un composé répondant à la formule :

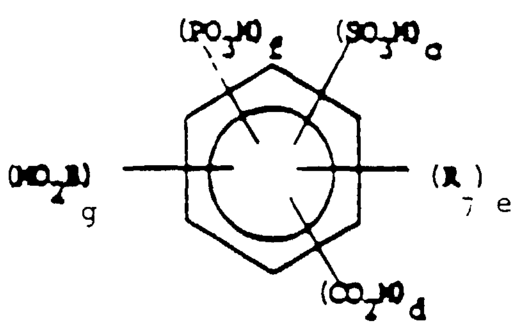

dans laquelle :

M représente un cation métallique ou un cation non-métallique à condition qu'au moins l'un des M soit un

proton ;
c vaut 1, 2, 3 ou 4 ;
e vaut 0, 1 ou 2 ;
f vaut 0, 1 ou 2 ;
g vaut 0, 1 ou 2 ;
d vaut 0, 1 ou 2 ; et
$R_7$ représente un groupe hydroxy, alkyle, halogéno, cyano, acide phosphonique, phosphonate, acide phosphinique, phosphinate, alcoxy, hydroxy, acide sulfinique, sulfinate ou un groupe alkyle ou aryle, substitué ou non, comportant de 1 à environ 30 atomes de carbone, dans lequel les substituants acceptables sont les groupes perhalogénoalkyle, halogéno, cyano, phosphonate, borate, acide phosphinique, sulfonate, carboxylate, phosphate, halogénoalkyle, acide sulfonique, acide sulfinique, sulfinate, acide phosphorique, acide borique, acide carboxylique, ou n'importe quels substituants $R_7$ au nombre de deux peuvent former ensemble une chaîne alcénylène complétant un système cyclique aromatique accolé, laquelle chaîne peut être substituée ou non par un ou plusieurs groupes halogéno, hydroxy, phosphonate, borate, acide phosphonique, sulfonate, phosphate, nitro, acide borique, acide phosphorique, carboxylate, cyano, acide sulfonique ou acide carboxylique, ou $R_7$ représente un fragment de formule :

$$(OCH_2CH_2)_qOCH_3 \text{ ou } (OCH_2CH(CH_3))_qOCH_3,$$

dans lesquelles q vaut de 1 à environ 10.

**10.** Solution selon la revendication 9, dans laquelle :

M représente un cation à condition qu'au moins l'un des M représente un proton ;
c vaut 1, 2 ou 3 ;
d, g et f valent 0 :
e vaut 0, 1 ou 2 ; et
$R_7$ représente un groupe alkyle, fluoro ou alkyle substitué par un ou plusieurs groupes fluoro, ou n'importe quels groupes $R_7$ au nombre de deux peuvent former ensemble une chaîne alcénylène divalente substituée ou non, complétant une structure cyclique de type naphtalène, anthracène ou phénanthracène, dans laquelle des substituants acceptables sont un ou plusieurs groupes acide sulfonique, fluoro, ou alkyle substitué par un ou plusieurs groupes acide sulfonique ou fluoro.

FIG. 1

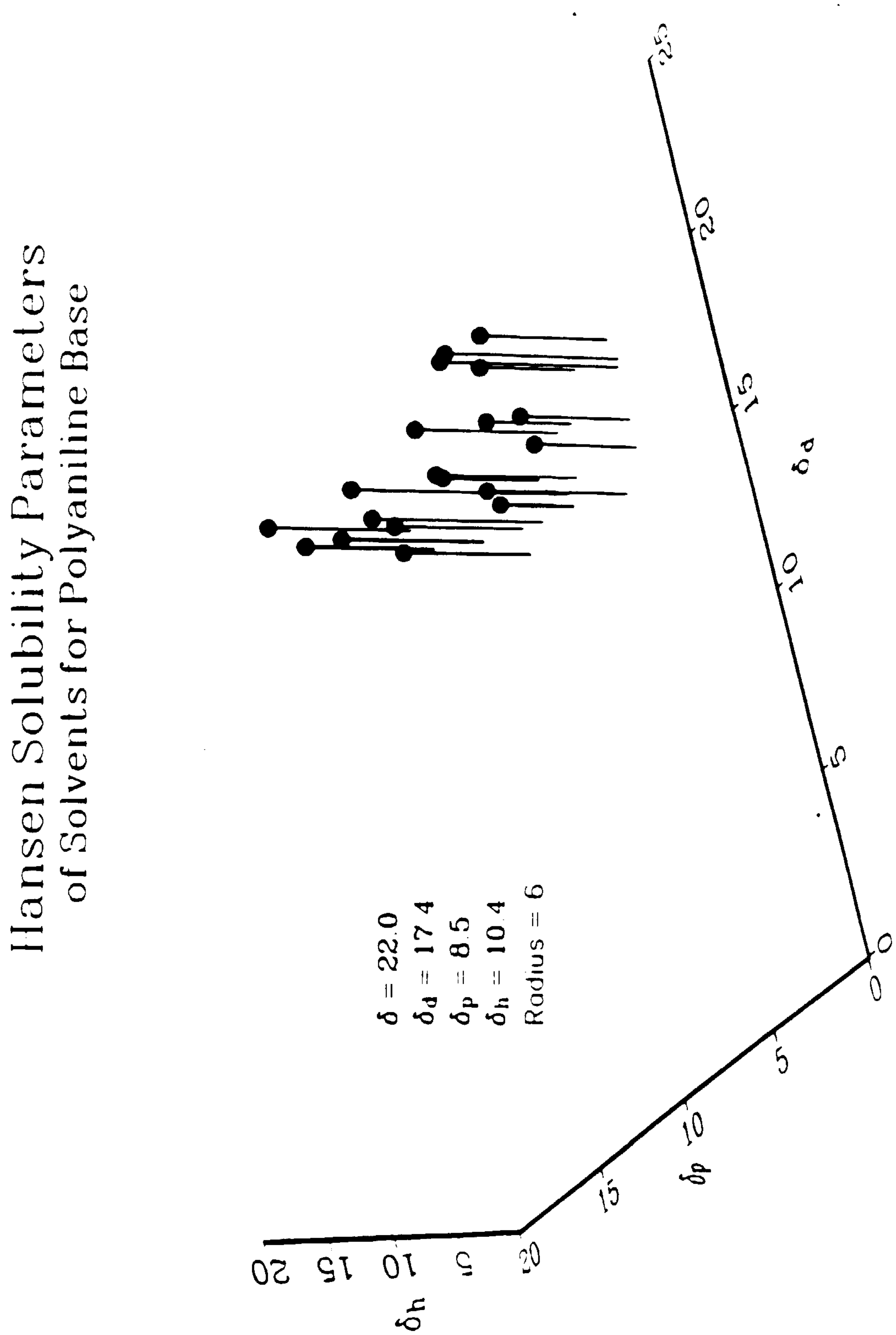
Hansen Solubility Parameters
of Solvents for Polyaniline Base
$\delta$ = 22.0
$\delta_d$ = 17.4
$\delta_p$ = 8.5
$\delta_h$ = 10.4
Radius = 6
$\delta_d$
$\delta_p$
$\delta_h$
0
5
10
15
20
25

FIG. 2

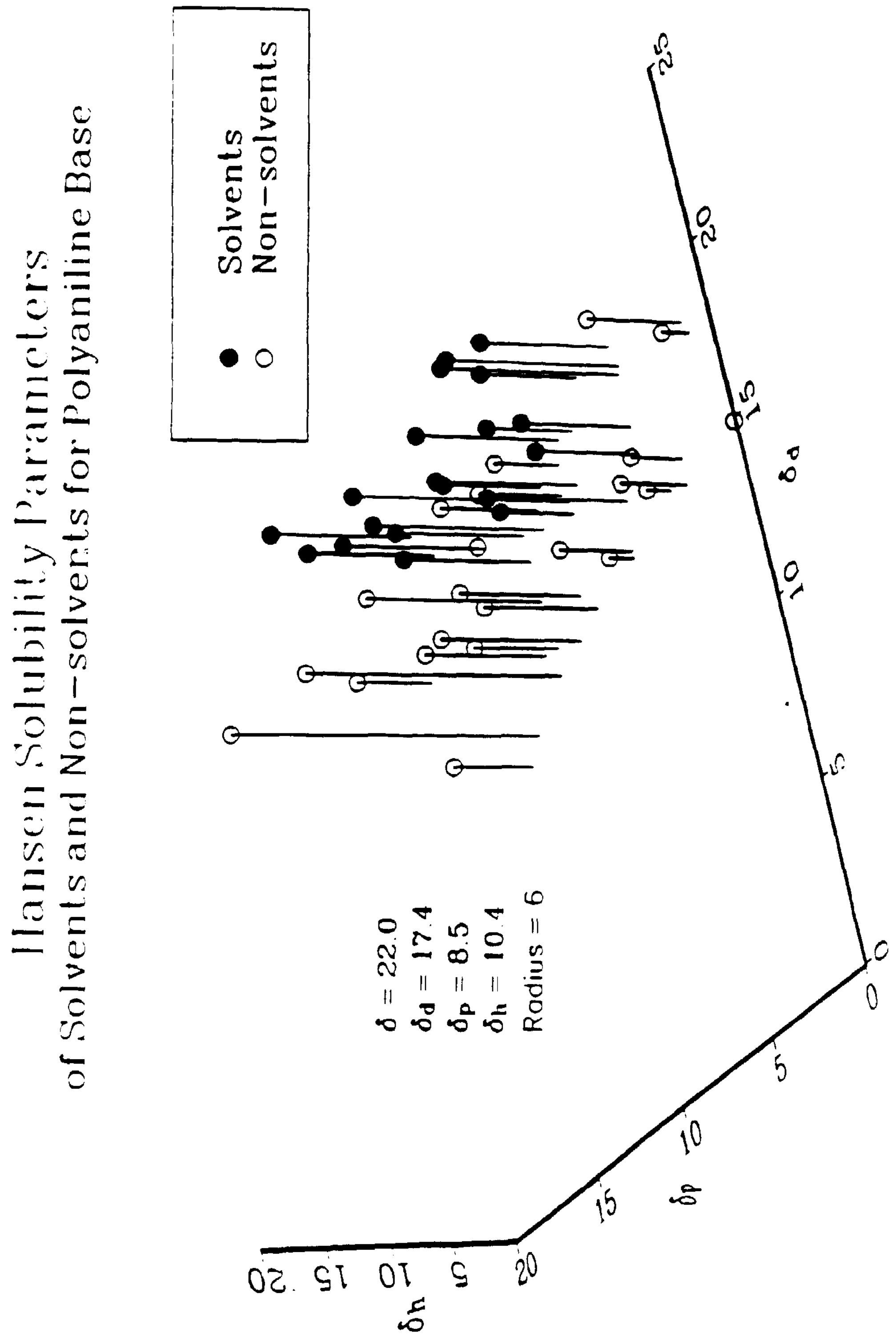
Hansen Solubility Parameters
of Solvents and Non-solvents for Polyaniline Base
Solvents
Non-solvents
δ = 22.0
δd = 17.4
δp = 8.5
δh = 10.4
Radius = 6
δd
δp
δh